(19) Europäisches Patentamt
European Patent Office
Office européen des brevets

(11) Publication number: **0 233 913 B1**

(12) **EUROPEAN PATENT SPECIFICATION**

(45) Date of publication of patent specification: **22.04.92**

(51) Int. Cl.[5]: **G02B 27/00**, G02B 5/28, G02B 5/18

(21) Application number: **86905048.4**

(22) Date of filing: **01.08.86**

(86) International application number: **PCT/US86/01574**

(87) International publication number: **WO 87/01211 (26.02.87 87/05)**

# (54) GRADED INDEX ASPHERIC COMBINERS AND DISPLAY SYSTEM UTILIZING SAME.

(30) Priority: **14.08.85 US 765883**

(43) Date of publication of application: **02.09.87 Bulletin 87/36**

(45) Publication of the grant of the patent: **22.04.92 Bulletin 92/17**

(84) Designated Contracting States: **DE FR GB SE**

(56) References cited:
**EP-A- 0 007 039**
**EP-A- 0 066 402**
**WO-A-85/01115**
**WO-A-85/04961**
**GB-A- 2 006 463**
**GB-A- 2 134 282**

**Technische Optik, by G. Schröder, Würzburg 1984, pp. 57-58**

(73) Proprietor: **Hughes Aircraft Company**
**7200 Hughes Terrace P.O. Box 45066**
**Los Angeles, California 90045-0066(US)**

(72) Inventor: **CHERN, Mao-Jin**
**28414 Seamount Drive**
**Rancho Palos Verdes, CA 90274(US)**
Inventor: **FERRER, John, J.**
**9100 Rayford Drive**
**Los Angeles, CA 90045(US)**
Inventor: **SMITH, Ronald, T.**
**320 Paseo de la Playa E**
**Redondo Beach, CA 90277(US)**

(74) Representative: **KUHNEN, WACKER & PARTNER**
**Alois-Steinecker-Strasse 22 Postfach 1553**
**W-8050 Freising(DE)**

EP 0 233 913 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

This invention relates generally to reflective optical materials, and more particularly to reflective diffraction and interference-type optical elements, such as optical filters and combiners, which are used, for example, in head-up displays or helmet-mounted visor displays.

In various optical systems, it is often necessary to provide a filter in order to remove undesired radiation while at the same time allowing desired radiation to be efficiently transmitted or reflected. Such filters and coatings are used, for example, to provide protection from laser radiation for personnel, for electro-optical detectors, and for optical mirrors in a laser system, as a holographic lens in a head-up display system, or in night vision devices. The optical filters currently used for such purposes include absorption filters, reflective multiple layer dielectric filters, and diffraction filters generated by optical holographic techniques. However, each of these approaches to providing optical filters has certain disadvantages, as discussed below.

The absorption filter comprises a material which is impregnated with absorption dyes or materials with intrinsic absorption at the wavelength of the incoming laser radiation, as described, for example, in the book entitled "Handbook of Optics", W. G. Driscoll, ed., McGraw-Hill Book Co., New York, 1978, in Section 8 (Coatings and Filters), at pages 7 to 32. This type of protection has the serious disadvantage that the absorbing dye decreases the amount of transmitted radiation to unacceptably low levels. In addition, for laser applications, as the laser radiation energy increases, the radiation can damage the protective filter itself.

The reflective multiple layer dielectric filters typically consist of alternate layers of two dielectric materials of different refractive indices, which are formed on the surface of a substrate by known deposition techniques, such as chemical vapor deposition, sputtering, or thermal evaporation. When the optical thickness of each layer is chosen to be one-quarter of the wavelength of the radiation being reflected, such a structure is referred to as a "quarterwave stack", as discussed, for example, in U.S. Patent No. 4,309,075 and in the book entitled "Handbook of Optics", previously referenced, in particular in Section 8. However, there are limitations on the spectral bandwidths which can be achieved by such structures, because of the limited material combinations available and the resulting restriction on the choices of index modulations. Moreover, defects at the abrupt interfaces between the layers in a multilayer structure can cause unwanted optical scattering. In addition, these defects can cause excessive absorption of radiation by the dielectric material, which can result in thermal damage to the optical filter. Furthermore, in a multilayer dielectric coating, the electric field is strongest at the interface regions between the high index material and the low index material. This highly localized field occurring at the abrupt interfaces can produce maximum temperature increases. Since the thermal expansion coefficients are different for the different dielectric materials of adjacent layers, high thermal stress is developed at the interface regions, which could cause delamination of the successive layers in the film. In addition, the high thermal stress could create microscopic dislocations which result in unwanted optical scattering by the film. Further, substrate roughness, pinholes and contaminants in the conventional multilayer structures formed by evaporation or sputtering techniques increase absorption and scattering, generate localized heating, reduce maximum reflectivity, and increase radiation damage. Finally, these multilayer coatings exhibit reflectance peaks at multiple wavelengths, which causes reduced optical transmission.

Diffraction optical elements have been generated using known methods of optical holography in photosensitive gelatin material, as discussed, for example, in the book entitled "Optical Holography", by Collier, Burckhardt, and Lin, Academic Press, New York, 1971, Chapter 9 (Diffraction from Volume Holograms) and Chapter 10 (Hologram Recording Materials), as well as in the book entitled "Handbook of Optical Holography", by Caulfield, Academic Press, New York, 1979, Chapter 10 (Application Areas). However, gelatin diffraction elements have environmental stability problems and are susceptible to degradation by humidity and heat. In order to overcome this problem, a protective layer such as glass or a glass-like coating can be used, but such a layer complicates the manufacturing process and adds to unit cost. Moreover, such gelatin filters are limited to use for radiation in the wavelength range from the visible to the near infrared (i.e., up to about 2 microns) since sensitized gelatin is not sensitive to longer wavelength exposures. Consequently, filters for infrared applications cannot be fabricated in a gelatin structure. In addition, the index modulation in the gelatin, which is produced by exposure to the holographic interference pattern and subsequent development, is limited to a shape approximating a sinusoidal configuration or a roughly superimposed multiple sinusoidal configuration. Furthermore, the fabrication of a gelatin filter requires numerous steps, in particular numerous wet chemical steps for development, which are sensitive to processing variables, such as temperature or vibration, that affect the efficiency and peak wavelength of the

final structure. In addition, since the resistance of gelatin to damage by heat or radiation is relatively low, gelatin filters are limited to low power applications. Finally, fabrication of a filter which reflects radiation at two selected wavelengths requires multiple exposure of the gelatin to two holographic patterns, which produces an irregular index profile that reduces the efficiency of the filter.

A further method for generating diffraction optical elements is described in WO-A-85/01115, entitled "Process for Forming a Graded Index Optical Material and Structures Formed Thereby". The process described in this reference concerns a method for depositing on the surface of a substrate a layer of a chosen material in which the index of refraction of the layer varies in a predetermined, continuous, and periodic pattern as a function of the thickness of the layer. The substrate is exposed to first and second predetermined reactants in the vapour phase which chemically interact to produce the chosen material, which deposits as layer on the substrate. During the deposition of the layer on the substrate, the relative proportions of said first and second vapour phase reactants are varied in a predetermined and continuous sequence to produce continuous gradiations in the stoichiometric composition of said chosen material deposited, as a function of the distance of said material deposited above the surface of the substrate. Thereby, a predetermined variation in the index of refraction of the layer is produced as a function of thickness having the form of the continuous and predetermined pattern. Additionally, predetermined changes in refractive index and/or thickness across the horizontal surface of the substrate may be produced in combination with the change in refractive index as a function of thickness. Diffraction optical elements formed by such a process include various optical filters and reflective optical coatings.

One general application in which gelatin filters have heretofore been employed is that of the optical combiner element of a reflective display, such as a head-up display (HUD) or helmet visor display (HVD) commonly used in aircraft display systems. U.S. Patent 3,940,204 discloses exemplary HUD and HVD systems. The laminated gelatin holographic combiner employed for these applications typically comprises a spherical plastic substrate to which are bonded successive layers of glass, the gelatin hologram, glass, plastic and an antireflective (AR) coating. The glass layers sandwiching the gelatin are required to protect the gelatin from degradation by humidity. As a result of the multiple layers, strong undesirable ghost images may be produced by the gelatin holographic combiners.

Combiners for display systems can be designed to compensate or balance aberrations in the display system. The compensation may comprise the implementation of aspheric reflective layers or surfaces. With the state of the current technology it is not economically feasible, on a production basis, to provide glass layers or substrates with aspheric surfaces. Instead the required asphericity is incorporated into the gelatin hologram itself, which means that the fringes will be slanted varying degrees with respect to the gelatin surfaces. This creates a grating at the hologram surface and results in a phenomenon known as chromatic dispersion, wherein the direction of light diffracted from the hologram is wavelength dependent. In a holographic display such as the HUD or HVD, if the display light source has any appreciable spectral bandwidth, chromatic dispersion will blur the image at the exit pupil, perhaps to an unacceptable level. Even with narrow band light sources, such as a cathode ray tube (CRT) with P43 phosphor, the fringe slant in some areas of the hologram may be large enough to cause significant dispersion-induced degradation of the image. Slant fringes may also result in flare, a condition in which extraneous diffraction images are produced. The extraneous diffraction may obscure the field of view.

A gelatin holographic combiner for a HUD or visor display is relatively complex and expensive to fabricate. For example, a typical gelatin holographic visor having impact resistance consists of a multi-layer laminant in which the gelatin hologram is sandwiched between two pieces of glass for humidity protection and then laminated between two pieces of polycarbonate visor for impact requirements. Antireflective coatings are applied to the respective outer surfaces of the polycarbonate pieces. The multiple laminate adds weight and complexity to the system. The gelatin holographic HUD combiner is similarly complex and heavy.

The weight of the combiner is an important consideration in the weight-critical cockpit environment. As a result of the relatively high weight of the visor gelatin hologram combiner in an HVD, the visor display center of mass is moved away from the pivot point of the pilot's head, so that the burden on his neck is increased. The increased cantilevered mass in the HUD gelatin hologram combiner decreases the combiner stiffness and resistance to vibration.

In the afore-addressed WO-A-85/01115, optical combiners are described utilizing graded index diffraction layers. The modulated index layer is applied parallel to the substrate surface, to provide a zero-degree (non-slanted fringe) diffraction optical element forming the optical combiner. Further, it is mentioned that the modulated index layer may alternatively be formed on an aspheric surface which incorporates optical power, to provide a diffraction optical element which compensates or balances optical aberration while providing undistorted see-through. The utilized substrate is formed e.g. of polycarbonate. On the surface of

the substrate a layer is formed comprising a continuously graded index optical material in a predetermined index pattern. As a separate element, a cover member is applied to the graded index layer. The cover member is laminated by means of an epoxy or other optically transparent adhesive to the substrate having the graded index layer thereon.

However, due to the fact that the graded index layer is sandwiched between two protective layers, the utilization of AR-coatings will be necessary in order to improve the performance of the combiner. This is yielding to an optical combiner structure having at least five layers.

However, as a result of the multiple layers, undesirable ghost images are produced by the combiner structure due to the plurality of interfaces of layers of different diffraction coefficients. Further, the resulting structure is relative complex and comparable costly.

Therefore, it would be an advantage to provide an optical combiner which is able to provide an excellent see-through performance and which further minimizes strong second images.

This object is solved by a combiner in accordance with claim 1.

In more detail, an improved optical combiner is provided which is useful in many applications, including HVD and HUD applications. The combiner comprises a substrate having at least one aspheric surface and a graded index coating which is applied to one surface of the substrate for providing a selectively reflective optical function. Further, a single broad band and the reflective coating is applied to the other surface of the substrate to minimize reflection of incident radiation in the visible wavelength range. The graded index coating and the antireflective coating are sandwiching the substrate and form the outer surfaces of the optical combiner.

The asphericity of the surface may be selected to compensate or balance optical aberrations in the display system. The coating eliminates the potential degradiation of gelatin holograms by a humid environment and eliminates the significant difficulties encountered in attempting to apply an even gelatin coating to an asperic surface.

The variation in the index of refraction may occur throughout the thickness of the coating and across the horizontal and lateral extent of the coating as well. A non-sinusoidal variation in the index profile throughout the thickness of the coating can produce a broadened peak in the spectral reflectivity function, as well as multiple peaks. This feature provides the capability of combiners with multiple color reflectivity responses, or which allow use of display light sources of wider spectral bandwidth, resulting in a brighter image and improved angular bandwidth.

In one embodiment the combiner is incorporated in a binocular helmet visor display resulting in improved optical performance, significant weight savings and a simpler, lower cost combiner structure. In another embodiment the combiner is incorporated into a head-up display for an aircraft resulting in improved optical performance, lower weight, improved safety and greater look-up capability.

Accordingly, it is a further advantage of the present invention to provide a new and improved optical combiner which substantially eliminates the chromatic dispersion and flare characteristics of slanted-fringe hologram combiners.

Another advantage is to provide an optical combiner comprising a substrate having an aspheric surface contour to compensate or balance optical aberrations.

Another advantage is to provide an improved optical combiner in which the diffraction coating is formed directly on a substrate and does not require glass protective layers.

Yet another advantage is to provide an optical combiner which minimizes strong second images.

Additional advantages of the invention are to provide an optical combiner having a relatively simple, lightweight structure which is suitable for fabrication by relatively low-cost techniques and with improved optical tolerances.

Further advantages are to provide improved helmet visor displays and head-up displays employing the improved optical combiner.

The foregoing and other advantages and features of the present invention will become more readily apparent from the following more particular description of the preferred embodiments of the invention, as illustrated in the accompanying drawings.

FIG. 1 presents a graph showing the change in the refractive index of a $SiO_x$ film which was deposited by a photochemical vapor deposition process, as a function of the flow rate of the silane reactant (prior art)

FIG. 2 is a schematic representation of the continuously graded index material in a sinusoidal pattern (prior art).

FIG. 3 presents a graph showing the dependence of the thickness of the deposited oxide on the relative intensity of the ultraviolet light used to initiate the photochemical vapor deposition reaction (prior art).

FIG. 4 is a schematic diagram of a structure having an aspheric substrate surface and a diffraction

optical element formed on the surface thereof (prior art)

FIG. 5 shows a curve indicating the measured spectral reflectance of a filter, while FIG. 6 presents the theoretical reflectance for such a structure (prior art)

FIG. 7 presents the refractive index profile for a composite index filter which reflects three separate wavelengths of radiation, while FIG. 8 presents the spectral response for such a composite index filter (prior art).

FIG. 9 is a schematic diagram of an optical combiner having an aspheric substrate structure and a diffraction coating formed on the surface thereof in accordance with the present invention.

FIG. 10 shows curves of the spectral reflectivity function of a typical gelatin hologram (broken line) with a sinusoidal index profile and a graded-index coating (solid line) with a non-sinusoidal index profile.

FIG. 11 shows curves of the spectral reflectivity function of typical gelatin holograms with sinusoidal index profiles (broken line), one designed to have a broad spectral bandwidth relative to the other, and a graded-index coating with a non-sinusoidal index profile (solid line) designed to have a broad spectral bandwidth.

FIG. 12 is a schematic representation of a combiner structure in accordance with the present invention comprising a graded-index coating in which the periodicity (and therefore the peak efficiency wavelength) of the index profile function varies as a function of the surface position coordinates.

FIGS. 13 and 14 depict structures used in a preferred method to fabricate a plastic combiner substrate in accordance with the present invention having an aspheric surface.

FIG. 15 is a simplified schematic drawing of a helmet visor display system incorporating a novel optical combiner in accordance with the invention.

FIG. 16 is a side view of the HVD system depicted in FIG. 15.

Fig. 17 is an angled side view of the HVD system depicted in Fig. 15, from a plane parallel to a reference line of the system.

Fig. 18 is another side view of the HVD system depicted in Fig. 15, illustrating the diffraction of image source light rays.

Fig. 19 is a perspective view of the HVD of Fig. 15 shown mounted on a helmet.

Fig. 20 is a simplified schematic view of a head-up display incorporating a novel optical combiner in accordance with the present invention.

Since the process for forming a graded index optical material in accordance with WO 85/01115 is preferably utilized by the present invention, the relevant disclosure of this document is incorporated in the specification to provide a detailed understanding of the present invention. The discription of the present invention starts on page 39, line 6.

In order to form the continously graded index optical material, it is required that the process for forming such a material be capable of a high degree of control over the composition of the deposited material. For the deposition of a continuously graded index oxide material, a particularly useful process is the low temperature, charge-free photochemical vapor deposition process described in U.S. Patent No. 4,371,587, assigned to the present assignee, and the details of which are incorporated herein by reference. In one embodiment of the latter invention, neutral, charge-free atomic oxygen is generated by the mercury-sensitized photodissociation of a chosen oxygen-containing precursor, such as nitrous oxide, as shown in Equations (1) and (2) below. Then, the atomic oxygen is reacted with a selected vapor phase reactant, such as silane, to form the desired oxide, silicon monoxide (SiO) or silicon dioxide ($SiO_2$), as shown in Equation (3) below.

(1) $Hg + h\nu(2537 Å) \longrightarrow Hg^*$ (photoexcited)

where h = Planck's constant

$\nu$ = frequency of absorbed radiation

(2) $N_2O + Hg^* \longrightarrow N_2 + O + Hg$

(3) $SiH_4 + O \longrightarrow SiO_2 + H_2O$

$\longrightarrow SiO + H_2O$

In an alternative process embodiment disclosed in U.S. Patent No. 4,371,587, the required atomic oxygen may be generated by the direct photodissociation of a chosen oxygen-containing precursor, such as nitrous oxide ($N_2O$), as shown in Equation (4) below. The atomic oxygen so formed reacts with the chosen vapor phase reactant as shown in Equation (3) above.

(4) $N_2O + h\nu(1750 - 1950Å) \text{-------->} N_2 + O$

The composition of the oxide product of Equation (3) above depends, in part, on the steady state concentration of atomic oxygen, which, in turn, depends on the amount of nitrous oxide present for a given amount of silane. Thus, by varying the ratio of the silane and nitrous oxide reactants present at a given point in time, the composition of the silicon oxide ($SiO_x$) product can be controlled, to produce a corresponding control of the refractive index of the oxide material deposited. The composition of the $SiO_x$ can range from SiO with a refractive index of 1.9 to $SiO_2$ with a refractive index 1.45.

The composition of the oxide, as well as the rate of deposition, depends on the mass flow of each of the reactants, the pump throughput, and the intensity of the reaction-inducing radiation. For a constant value for pump throughput and radiation intensity, the effect of changes in the flow rate of one of the reactant gases can be determined. FIG. 1 presents a graph showing the change in the refractive index of a $SiO_x$ film which was deposited as described above, as a function of the flow rate of the silane reactant for a constant flow rate of $N_2O$ at 62.0 standard cubic centimeters per minute (sccm). As can be seen in FIG. 1, the refractive index and composition of the $SiO_x$ film have a well-defined dependence on the gas flow rate ratio of the reactants. As shown in FIG. 1, the index of the $SiO_x$ film was varied from 1.46 to 1.60 by varying the $SiH_4$ flow rate by as much as a factor of five, while keeping a fixed $N_2O$ flow rate. The large variation in flow rate required to achieve a change in refractive index ($\Delta n$) of 0.14 indicates that the index can be changed precisely and reproducibly by the above-described process.

Consequently, in accordance with the process, by accurately controlling the gas flow rate ratio of the silane reactant to the nitrous oxide reactant as a function of time, the composition of the $SiO_x$ product can be controllably and continuously altered as a function of time of deposition or thickness of the deposited material. In particular, the gas flow rate of the silane can be varied in a sinusoidal pattern to produce a corresponding sinusoidal variation in the composition of the $SiO_x$ deposited as a function of distance above the surface of the substrate, as shown in FIG. 2. The substrate 10, shown in FIG. 2 has a layer 12 of a continuously graded optical material, such as $SiO_x$, formed on the surface thereof by the above-described process. The composition of the $SiO_x$ material at a particular point along the depth or thickness 14 of the film 12 depends on the particular ratio of the reactant gases and the gas flow rate of silane at the time that particular material was deposited. Since the gas flow rate of the silane is varied in a sinusoidal pattern, the composition of the $SiO_x$ material in the layer 14 will vary in approximately the same sinusoidal pattern, taking into account small deviations from linearity. Further, since the refractive index of the $SiO_x$ materialvaries as the composition thereof, it follows that the refractive index (n) of the $SiO_x$ material likewise varies in a sinusoidal pattern 16 as a function of the thickness 14 of the layer 12, as shown in FIG. 2. Thus, there is a gradual change in the refractive index of the deposited layer 12 between upper and lower limits of n and in a predetermined pattern. The difference between the highest and lowest values of the refractive index of the $SiO_x$ material is $\Delta n$, the index modulation. The notation $\Lambda$ in FIG. 2 refers to fringe periodicity, the significance of which is discussed below with regard to wavelength of reflected light and Equation (5).

Furthermore, the gas flow rate of the silane may be varied in some other pattern besides a sinusoidal pattern, such as a quasi-sinusoidal, triangular, sawtooth, squarewave, or predetermined irregular pattern, to produce corresponding variations in the composition and refractive index of the deposited material.

In addition to the effect of the reactant gas flow rate ratio discussed above, it should also be noted that the intensity of the reaction-inducing ultraviolet radiation affects the rate of deposition of the oxide. FIG. 3 presents a graph showing the dependence of the thickness of the deposited oxide in a twenty-minute period on the relative intensity of the ultraviolet (UV) light used to initiate the photochemical reaction. As shown in FIG. 3, as the intensity of the UV light is increased, the thickness of the oxide deposited in a given time period or the deposition rate increases. The source of the UV light used to generate the data of FIG. 3 in accordance with the first process embodiment was a bank of four mercury vapor arc lamps with a major output at a wavelength of 254 nanometers, at a distance of 2.75 inches (6.99 centimeters) from the substrate. Alternatively, a scanning laser beam may be used as the source of reaction-inducing radiation, as discussed in further detail herein. In addition to the reaction parameters discussed above with regard to FIGS. 1 and 3, control of the gas-flow pattern and the gas pressure inside the deposition chamber is also necessary for producing reproducible and uniform oxide layers.

In accordance with the above-described process, the modulated index layer is formed parallel to the

substrate surface, to provide a zero-degree (non-slanted fringe) diffraction optical element. However, the modulated index layer may alternatively be formed on an aspheric substrate which incorporates optical power, to provide a diffraction optical element which compensates or balances optical aberration while providing undistorted see-through. Such a structure is shown schematically in FIGS. 4a and 4b. In FIG. 4a, there is shown a substrate 20 having an arbitrarily-shaped aspheric surface and formed, for example, of polycarbonate. On the surface of the substrate 20 and conforming thereto, there is formed a layer 22 comprising a continuously graded index optical material in a predetermined index pattern. As a separate element, there is shown in FIG. 4a a cover member 24, in which the surface 26 that faces the substrate 20 matches the surface profile of the substrate 20. The cover member 24 is laminated by means of epoxy or other optically transparent adhesive (not shown) to the substrate 20 having the layer 22 formed thereon, to provide the structure shown in FIG. 4b. As represented schematically in FIG. 4b, incident radiation 28 of a wavelength in the selected reflective band is reflected by the graded index layer 22; while radiation 30 with a wavelength outside the selected reflective band passes through the complete structure. When used in a head-up display system such as described in U.S. Patent No. 3,940,204, assigned to the present assignee, incident radiation 28 is the light from a cathode ray tube which is diffracted by the graded index layer 22 to the eye of the viewer, and the radiation 32 is light from the environment outside the cockpit which is transmitted through the complete structure of FIG. 4b to the eye of the viewer. The ability to use such aspheric substrates greatly increases the number of diffraction optics applications which may be satisfied by the zero-degree diffraction optical element. A structure such as shown in FIG. 4b is useful for head-up display diffraction optics combiners, for example, as previously discussed.

Further, it is anticipated that a slant fringe diffraction optical element may be formed by positioning the nozzle slits of one reactant gas near the substrates. The other reactant gas flows uniformly across the entire substrate surface; and the slits are separated at a distance equal to the fringe spacing on the substrate surface. The slant angle is controlled by the related movement of the substrate and the nozzle slits, as the deposition proceeds.

The significance of the above-described process for forming a continuously graded index optical material in a predetermined pattern is that such a process may be advantageously used to form a reflective diffraction optical element which performs similarly to a conventional holographic filter, to diffract the incident light and produce a preselected diffraction effect, as described, for example, in the book entitled "Optical Holography", previously referenced, in Chapter 1 (Introduction to Basic Concepts).

The optical properties of a film consisting of discrete, multiple layers are well-described by multilayer matrix theory, as discussed, for example, by P. H. Berning in the book entitled "Physics of Thin Films", edited by G. Hass, Academic Press, New York, 1963, starting at page 69. This theory may be applied to the calculations of the optical properties of a graded-index film by approximating the graded film as a stack of "N" very thin discrete-index layers. For "N" of a very large value, this approximation is sufficiently accurate for the devices of the present invention. Using this approximation and conventional multilayer film optical theory, the reflectance, transmittance, and absorbance for both s- and p-polarizations, as well as their averages can be calculated, preferably with the aid of a computer program, for graded-index films. These calculations can be made at any wavelength or angle of incidence for any graded-index coating configuration. The electric field and absorption profile within the coating can also be calculated. Such calculations indicate the feasibility of fabricating narrow band, high reflectance spectral filters by deposition of graded index films. This method of analyzing graded-index films is described, for example, by K. A. Winick, in the Final Scientific Report on "Thick Phase Holograms", Environmental Research Institute of Michigan, January, 1981.

Calculations of the optical properties of graded index films illustrate that the reflectance characteristic of the film depends primarily on the Fourier composition of the index profile. Thus, for example, a holographically exposed diffraction optical element with sinusoidal index modulation has the same performance at the designed reflection wavelength ($\lambda_p$) as that of the multilayer square modulation of equal periodicity whose fundamental Fourier component is of equal modulation amplitude. Consequently, for some diffraction optics applications where high reflectance at only a single wavelength is desired, the squarewave multilayer film and the sinusoidally modulated film are equally viable alternatives, in terms of optical properties. However, because of the disadvantages of the multilayer structure previously discussed, the sinusoidal profile or some other graded index profile which the process provides, may offer distinct advantages over the multilayer squarewave profile. Furthermore, the graded index film may be designed to have any peak wavelength or wavelengths desired, barring materials limitations, by designing each sinusoidal component of the index profile to have a periodicity $\Lambda$ described in Equation (5) below.

(5) $\Lambda_i = \lambda_{pi}/2n$

where

$\Lambda_i$ = periodicity of the $i^{th}$ sinusoidal component in the index profile

$\lambda_{pi}$ = $i^{th}$ peak wavelength

n = average index of refraction

$SiO_x$ graded index filters are material-limited to a peak wavelength from 0.4 to 2.5 micrometers, since $SiO_x$ becomes highly absorptive outside this range. However, other materials besides $SiO_x$, such as aluminum oxide or zirconium oxide, may be used to form a layer with a graded index profile which reflects radiation at higher or lower wavelengths. Thus, by the process, diffraction optical elements may be formed to reflect radiation in the ultraviolet, visible and infrared ranges.

In addition, in accordance with an alternative to the first process the peak reflection wavelength ($\lambda_p$) may be varied across the horizontal surface of the diffraction optical element by varying the localized reactant gas flow rate across the substrate surface as desired or by varying the intensity of the reaction-inducing radiation, as discussed herein, to produce variations in the thickness, refractive index, periodicity, and $\lambda_p$ of the deposited material. Such devices with horizontal variations of $\lambda_p$ have been heretofore unattainable.

Moreover, the process may be used to form layers which exhibit modulation in either absorptivity or refractive index or both, since there is a known relationship between absorptivity and refractive index. Absorptivity $\alpha$ is defined in Equation (6) below, and the relationship thereof to refractive index is defined in Equation (7) below.

$$(6) \qquad \alpha = \frac{4\pi k}{\lambda}$$

where

$\alpha$ = absorptivity

k = extinction coefficient

$\lambda$ = wavelength of incident radiation

$$(7) \qquad N = n - ik$$

where

N = complex refractive index

n = real refractive index

k = extinction coefficient

Thus, in the same way that variations in n, the real refractive index, of a layer of material may be produced as previously described herein, so may corresponding variations in the extinction coefficient, k, of a layer of material be produced. For example, photochemically deposited oxides, such as $SiO_x$, have a cutoff region (e.g. about 2.5 micrometers for $SiO_x$) at which they become highly absorptive, and the absorptivity is highly dependent on the stoichiometric composition. Thus, by varying the stoichiometric composition of $SiO_x$,a structure may be produced which exhibits modulation of absorptivity as well as refractive index. Consequently, the detailed discussion herein with respect to "refractive index" is intended to include the "complex refractive index" described above.

Using the above-described photochemical vapor deposition process as further described in Example 1, an oxide filter was formed with a 16-period, sinusoidally modulated refractive index that varied between 1.45 and 1.63, producing a peak wavelength at 1.48 micrometers ($\mu$m). The spectral reflectance of the filter was measured for various wavelengths of incident radiation using a spectrophotometer and known precedures, and the curve obtained is shown in FIG. 5. A reflectance of 81.3 percent at the fundamental wavelength ($\lambda_o$) of 1.48 micrometers was obtained, as shown in FIG. 5. This reflectance value is to be compared to the theoretical prediction of 94.1 percent reflectance at 1.48 $\mu$m shown in FIG. 6, which was based on the theory and calculations previously discussed.

The fact that the measured reflectance peak of 81.3 percent in FIG. 5 deviated somewhat from the predicted 94.1 percent in FIG. 6 indicates that the modulated-index pattern of the deposited film deviated somewhat from the intended sinusoidal pattern. This conclusion is supported by the observation of small reflectance peaks in FIG. 5 at higher-order harmonics: 1/2 $\lambda_o$ (0.75 $\mu$m) and 2/3 $\lambda_o$ (1.0 $\mu$m). Each reflectance spike corresponds to a particular Fourier component of the refractive index profile. Therefore, a perfect sinusoidally modulated index profile will exhibit only one reflectance peak, at the fundamental wavelength of $\lambda_o$. The fact that the higher-order peaks in FIG. 5 are low-amplitude indicates that the deviation of the film from sinusoidality is relatively small. It is anticipated that an accurate sinusoidal pattern

for the refractive index profile can be achieved by using a monitoring and feedback loop control system for measuring refractive index and thickness of the film as deposited. The more accurate the sinusoidally modulated index profile, the higher the reflectance value at the fundamental wavelength.

In addition, with regard to FIG. 5, the absence of a measured reflectance peak at $\lambda_o/3$ (0.5 µm), which is characteristic of a multilayer structure, indicates that this coating is not a discrete-layer quarterwave stack, and is consistent with the result predicted for a sinusoidally modulated film.

The above-described theory and calculations can be used to determine the feasibility of fabricating other narrow band, high reflectance spectral filters by the process of the present invention. For example, using such calculations, it has been determined that a coating design with reflectivity of 99.97 percent at 0.53µm can be achieved with a sinusoidal index profile having a modulation of 0.105 and a thickness of 15µm. It has also been determined that as the film thickness increases, the index modulation can be reduced and applied for an increased number of cycles, while still maintaining the required reflectivity. Another factor for consideration is the reflectance bandwidth. The larger the index modulation, the wider the reflectance bandwidth at a given thickness or at a given efficiency level, which causes reduced photopic see-through or signal transmission. As another example, it has been determined from such calculations that an optical coating design with a reflectivity of 99.93 percent at 1.315 micrometers can be achieved with a graded index layer of $SiO_x$ having a sinusoidal profile, with an index modulation of 0.42, a thickness of 8.2 micrometers, and a modulation period of 0.396 micrometers.

Furthermore, in accordance with the process, there may be formed a coating with a composite index profile which is the linear superpositioning of a number of sinusoidal index profiles and which exhibits high reflectance at multiple wavelengths corresponding to the individual sinusoidal index profiles. This kind of composite profile can be designed analytically as described above and fabricated using the graded index process. For example, the three separate index profiles required to provide protection against three separate wavelengths of radiation at 0.6 µm, 0.8 µm, and 1.0 µm are combined to form the composite refractive index profile versus film thickness shown in FIG. 7. Using the composite profile index of FIG. 7 for a total film thickness of 16 micrometers on a glass substrate, the theoretical reflectance of such a device at various wavelengths is shown in FIG. 8. The extremely high reflectance at 0.6 µm, 0.8 µm, and 1.0 µm is evident in FIG. 8. In a similar manner, other coatings may be formed with other index profiles which are analytically synthesized to provide particular optical characteristics.

In addition, the photochemical vapor deposition process of U.S. Patent No. 4,371,587 can be used to produce many different oxide films, such as $SiO_2$, $TiO_2$, $Al_2O_3$, $Ta_2O_5$, and $SnO_2$. Further, such a process can be used to provide a film structure that consists of two oxides with compositions that change gradually and continuously from one oxide to another. For a composite oxide film of $SiO_2$, with a refractive index of 1.45, and $TiO_2$, with a refractive index of 2.55, the maximum index modulation achievable is 1.1, as compared to the 0.45 modulation achieved in the $SiO_x$ oxide system. The indices of some other useful oxides are 1.76 for $Al_2O_3$, and 2.18 for $ZrO_2$.

Finally, as a practical matter, preliminary analysis has shown that the tolerance on the thickness and index variation are higher for the graded index film structure of the present invention than for a prior art multilayer quarterwave stack coating. It is anticipated that if a reasonably precise monitoring system for thickness and refractive index is installed, the photochemical vapor deposition process will produce coatings with excellent reflectance, and showing minimum degradation due to the random error associated with the deposition process.

There are several advantages in forming a reflective diffraction optical element for use as a filter by this process. First, the filter is formed of an oxide material which is inherently stable in high humidity and over a wide temperature range, whereas conventional gelatin holograms are not. In addition, the $SiO_x$ formed by the photochemical vapor deposition process has exhibited superior adhesion on glass, as well as plastics such as polycarbonate, and conforms to the shape of the substrate surface. The latter two properties make the process particularly well suited for the fabrication of head-up display combiners or night vision visors on curved substrates. Moreover, the $SiO_x$ can be deposited at a temperature sufficiently low (e.g. 30 to 200 °C) so as to avoid thermal degradation of a plastic substrate, which makes possible the use of light weight plastic substrates in laser eye protection devices and head-up display devices. Further, the $SiO_x$ formed as described herein possesses excellent optical and mechanical properties, such as good surface morphology and low pinhole or defect density, which result in reduced optical scattering. In addition, the low defect density of such an oxide makes it less susceptible to laser radiation damage. Further, by the process a continuously graded index optical material is deposited, and, thus, avoids the previously discussed prior art problems, such as reduced transmission, optical scattering, and thermal damage, caused by the juxtaposition of discrete layers of differing composition. By using the continuously graded index reflective coating, the prior art problems of localized concentration of mechanical stresses as well as a concentration of the

electric field are avoided. It has been analytically determined that the peak electric field in a filter with a sinusoidal profile is less than the peak electric field encountered in a square-wave multilayer filter having identical optical properties at the desired wavelength. In addition, the gradual change in composition in the material reduces the thermal stress in the film when subjected to the high laser energy flux. This reduced thermal stress is expected to increase the laser damage threshold. The gradual compositional change may also reduce the absorptance of the film. In addition, a better thermal match with the substrate may also be attained by adjusting the composition of the dielectric at the substrate interface so that the substrate and dielectric have compatible thermal expansions.

Moreover, the index of refraction of the material deposited can be adjusted to a predetermined profile, which permits greater flexibility in the design of the optical element. In particular, the optical element can be formed as a non-sinusoidal profile to provide high reflectance at several wavelengths, as previously discussed with regard to composite index profile devices. These latter devices are novel optical devices which have not been possible heretofore, such as a multiple-wavelength narrow band reflective diffraction optical element incorporated in a single deposited layer, which is useful in two-color head-up display combiners, laser eye protection visors, and reflective coatings on laser mirrors. In addition, the periodicity of the profile can be changed to reject any predetermined laser line within the spectral band of the deposited material, e.g. a peak wavelength from 0.3 to 2.5 m for $SiO_x$. Further, because the optical devices can be constructed to provide high reflection of radiation within a narrow bandwidth, such devices have high transmission of the signal of interest and enhance the efficiency of signal detection. In addition, the devices can provide high reflection over a wide wavelength region (e.g., 0.3 to 2.5 micrometers or greater for $SiO_x$ or up to 5 micrometers for $Al_2O_3$).

Further, the continuously graded index filters can be fabricated by a photochemical vapor deposition process which is charge-free and avoids charge damage or radiation damage to sensitive devices, such as charge-coupled devices and compound semiconductor devices. In addition, such a process is performed at a low temperature, e.g., 30 to 200° C, and avoids thermal damage to temperature-sensitive substrates, as well as stress caused by thermal mismatch of the substrate and deposited layer. Moreover, the material deposited by this photochemical vapor deposition process has excellent surface morphology, low pinhole density, low impurity content, low stress, large area uniform thickness, and conformity to substrate shape. The afore described process is highly reproducible and capable of large-scale production of uniform deposits. Finally, by the above-described process, a filter can be fabricated by a single step process, which reduces fabrication complexity and cost. It is particularly noteworthy that by the process a filter which protects against multiple wavelengths of radiation can be fabricated in a single device by a single step process.

Further, the afore described process may be used to form a reflective coating on the surface of a mirror substrate to provide a surface with high reflectivity, low absorption, and low scattering. Such a highly reflective film is useful on mirrors provided in laser systems to reflect and guide the laser beam. In order to form such a reflective coating, the process previously described herein with particular reference to FIG. 5 is performed on a molybdenum or silicon mirror substrate, for example. The reflectance of this coating was measured at various wavelengths of incident radiation and the results are as shown in the curve of FIG. 5 previously discussed. In order to improve adhesion and decrease stress, it may be advantageous in some cases to use a binder material, such as chromium or titanium, between the substrate and the graded index material. Such a metal binder may also be used to reduce the thickness requirement of the deposited film at a particular index modulation.

Furthermore, in accordance with a second process embodiment, a continuously graded index optical material may be deposited by the photochemical vapor deposition process previously described herein except that a scanning laser beam or other collimated beam is used as the source of radiation to initiate the desired chemical reaction. The laser beam may be scanned across the surface of the substrate or other means may be used to effect relative movement of the laser beam with respect to the substrate, such as moving the substrate or adjusting the optical focusing system, as is known in the art and described, for example, in U.S. Patent No. 4,340,617. The laser beam or other collimated beam used has an output at the wavelength of radiation required to induce the desired photochemical reaction, as previously discussed herein. The beam is scanned across the surface of the substrate in a controlled manner so that one segment of the substrate at a time is exposed to the beam, with the segment size being determined by the beam diameter. The rate of deposition of the reaction product depends on the amount of reaction-inducing radiation to which the reactants are exposed. Consequently, if a given segment of the substrate has a longer exposure to the laser beam, that segment will have an increased amount of reactive product deposited thereon. Thus, a spatial variation of the deposition rate over the horizontal surface of the substrate can be achieved by controlling the scanning speed or duty cycle and pattern of the laser beam. Since the

deposition rate determines the thickness of the deposited layer, the thickness of the deposit and the refractive index thereof are likewise varied over the lateral surface of the substrate in accordance with the above-described scanning laser beam exposure. This variation in thickness may be in a continuous manner or in a stepped manner, as determined by the scanning pattern of the laser beam. The resulting structure has a continuously graded index layer as a function of thickness as previously described herein, and, in addition, the thickness of that layer varies in a predetermined pattern across the surface of the substrate. Since the amount of modulation within a given thickness determines the periodicity of the index modulation, the deposited layer on different segments of the substrate surface will have different periodicities. As previously discussed with regard to Equation (5) herein, the periodicity of the index modulation determines the peak wavelength of reflected radiation. Consequently, in accordance with this second process embodiment, a diffraction optical element may be formed to have different peak wavelengths of reflection and/or thickness at various segments of the substrate surface. Such a structure is useful as a combiner in a head-up display system. Alternatively, in accordance with the second process embodiment, the amount of reaction-inducing radiation to which predetermined segments of the substrate are exposed may be varied by using a flood source of ultraviolet radiation and a mask placed close to the substrate surface to prevent the radiation from striking the substrate at predetermined segments.

The first and second process embodiments may be used to provide various optical elements with varying thickness and/or refractive index across the horizontal surface thereof, in addition to the modulated refractive index as a function of thickness as previously described. In one case, the refractive index is modulated as a function of thickness to provide a chosen $\lambda_p$ as described with regard to the first process embodiment and, in addition, the thickness of the deposited layer is varied in a desired pattern, such as to form a convex surface, as described above with regard to the second process embodiment. The resulting structure has a horizontal variation in thickness and the same $\lambda_p$ across the horizontal surface of the structure. A structure having such a variation in thickness provides a change in the efficiency of the diffraction element across the horizontal surface thereof, which is advantageous for compensating for spatial nonuniformity in the intensity of the incident radiation. In a second case, the thickness of the deposited layer is varied in a desired pattern as described immediately above, and, in addition, $\lambda_p$ is varied across the horizontal surface of the layer as previously described with respect to an alternative of the first process embodiment. The resulting structure has a horizontal variation in thickness and variations in $\lambda_p$ across the horizontal surface of the structure. In a third case, the thickness of the deposited layer is held constant and the refractive index of the deposited layer is varied across the horizontal surface of the substrate to produce variations in periodicity and $\lambda_p$,as described above. In such a structure, variations in $\lambda_p$ across the horizontal surface of the substrate are not dependent on the thickness of the deposited layer. The constant thickness of such a structure may be achieved by placing a cover with an iris opening over the substrate and opening or closing the iris over a given segment of the substrate to control the amount of radiaton striking the substrate segment, while at the same time altering the intensity of the radiation or the reactant gas flow rates in order to achieve the required modulated refractive index as a function of thickness and as a function of horizontal position on the substrate surface.

In summary, the following are some of the unique characteristics of the process which provide conventional optical filter devices with improved performance, as well as novel filter devices heretofor unavailable:

a. arbitrary profile of (complex) refractive index modulation by control of reactant flow rate ratio;
b. high index modulation;
c. variable peak wavelength across the surface of the substrate;
d. low temperature deposition;
e. uniform coating conformed to substrate shape; and
f. versatility in deposition materials.

In particular, some of the new and improved optical devices which may be formed are:

a. wide angle optical filters with variable $\lambda_p$ across the filter for wide angle receptions, such as bandpass filter, narrow band transmission or reflection filter, cut-off filter;
b. absorption or transmission type apodizer to provide even intensity across the resultant beam, such as variable density neutral density transmission filter, variable reflection filter;
c. surface grating with grating profile shaped by the UV light profile and/or the variable index through grating depth;
d. variable index coating on substrates or fiber cores to form special optical devices, such as optical fibers or integrated optics elements;
e. element for replication of masks and computer generated holograms;
f. IR and visible filter for laser hardened IR detector and solid state components, such as a laser

protection filter for detectors, or for personnel laser eye protection;

g. narrow band, single color or multi-color, transmission or reflection or cut-off type filters;

h. thin lens with variable surface profile and variable index throughout or across the lenses;

i. anti-reflection, or high reflectivity filters on plastic substrates or on glass substrates;

j. any of the above coatings on aspheric substrates; and

k. slanted fringe optical devices.

Moreover, the process is not limited to the use of oxides of silicon, but may include any of the oxides which may be deposited by the process disclosed in U.S. Patent No. 4,371,587, previously referenced herein. In addition, other materials besides oxides may be deposited as described herein by other photochemical processes, such as silicon nitride by the process disclosed in U.S. Patent 4,181,751, assigned to the present assignee, and various sulfides by the process disclosed in U.S. Patent 4,447,469, assigned to the present assignee. Further, combinations of these various materials may be used, such as silicon dioxide in combination with silicon nitride. As a practical matter, the material deposited must be stable in the presence of air and water vapor.

Furthermore, the described method is not limited to photochemical vapor deposition processes, but includes other known deposition processes in which the reactant gas flow rate ratios are controlled as described herein to provide a continuously graded index optical material with a predetermined index profile. For example, in a thermal chemical vapor deposition process in which reactants are heated to a sufficiently high temperature to bring about a chemical reaction to form a desired product, the gas flow rate ratio of the reactant gases is controlled in the manner previously discussed herein. A type of thermal chemical vapor deposition of particular interest in this regard is the deposition of an epitaxial layer by metallo-organic chemical vapor deposition. In a thermal evaporation or physical vapor deposition process in which two sources, such as zinc sulfide and zinc selenide, are heated to produce evaporation thereof and subsequent condensation on the substrate, the thermal evaporation of one source, such as zinc sulfide, is held at a constant rate while the thermal evaporation of the second source is varied as a function of time, in the manner discussed herein. Similar methods can be used in electron beam evaporation techniques and sputter evaporation techniques using two targets. Likewise, in a molecular beam epitaxial growth process in which an epitaxial layer of a material is grown by causing beams of atoms or molecules to impinge on the target, the relative proportion of the impinging beams can be altered as described herein to provide an epitaxial layer having a graded refractive index in a predetermined pattern.

## EXAMPLE 1

This example illustrates the formation of a continuously graded index optical material in a predetermined pattern suitable for use as a filter, in accordance with the first process embodiment as previously described herein. The photochemical vapor deposition process and apparatus described in U.S. Patent No. 4,371,587, previously referenced herein, were used to deposit a film of $SiO_x$ on a glass slide substrate having dimensions of 2 inches (5.08 cm) by 3 inches (7.62 cm) and 40 mils (0.10 cm) thick. The vapor phase reactants were silane ($SiH_4$) and nitrous oxide ($N_2O$), and mercury was used as a photosensitizing agent. The reaction-inducing radiation was at a wavelength of 2537Å; the substrate temperature was 100° C; and the total operating pressure was approximately one torr (millimeter of mercury). Alternatively, an operating pressure within the range of about 0.1 to 50 torr may be used. The reactant gases $SiH_4$ and $N_2O$ entered at one end of the deposition chamber through mass flow controllers which control the flow of the reactant gases. The flow of reactant gases was initiated and followed by adjustment of total pressure, gas flow rates, gas flow ratios, and substrate temperature. Gas pressure during deposition was kept constant and the substrates were positioned so that there was minimum disruption of the laminar gas flow pattern. Upon system equilibration, the deposition of $SiO_x$ was initiated by transmission of the reaction-inducing radiation into the reaction chamber, using the data of FIG. 3, previously discussed, to determine the required intensity of light. A bank of four low-pressure mercury vapor lamps, obtained from Canrad-Hanovia, Inc. of Newark, New Jersey, was used as the source of light and was located approximately 2.75 inches (6.99 centimeters) from the substrate surface. The gas flow rate of $N_2O$ was held constant at 62.0 sccm and the gas flow rate of $SiH_4$ was varied in a controlled manner from 0.90 sccm to 3.5 sccm.

Using the previously discussed data of FIG. 1 and a graph generated from experimental data to show the change in flow rate with time, the flow rate of the silane reactant was altered with time by manual turning of the gas flow controller knob at a predetermined rate to produce an oxide film with a refractive index that varied in a continuous sinusoidal pattern from 1.45 to 1.63, for a total of 16 periods, producing a peak wavelength at 1.48μm. The measured spectral reflectance of the holographic filter so formed is presented in FIG. 5, showing an 81.3 percent peak efficiency, and this data has been previously discussed

in detail. Such a structure is useful, for example, as a highly reflective coating on the surface of a mirror used in a laser system, in order to provide maximum transmission of the laser signal and minimum laser damage to the mirror.

EXAMPLE 2

This example illustrates the formation of a layer of a contiuously graded index optical material on the surface of a substrate in accordance with the afore described process, in which a composite oxide film of silicon dioxide ($SiO_2$) and titanium dioxide ($TiO_2$) is formed, to provide a maximum refractive index modulation of 1.1.

The process described in Example 1 above is followed except that titanium tetrachloride ($TiCl_4$) is used as an additional vapor phase reactant. As described in U.S. Patent No. 4,371,587, the atomic oxygen formed by the photochemical dissociation of the nitrous oxide reacts with the $TiCl_4$ to form titanium dioxide. In accordance with the described process, the gas flow rate of nitrous oxide is held constant and the gas flow rates of $SiH_4$ and $TiCl_4$ are varied in a controlled manner with respect to each other and with repect to the nitrous oxide. The required flow rates of the $SiH_4$ and $TiCl_4$ are determined from experimental data which indicate the dependence of the refractive index of the deposited material on the flow rates. The $SiH_4$ and $TiCl_4$ reactants each react with the atomic oxygen to form $SiO_2$ and $TiO_2$, respectively, which deposit simultaneously on the substrate to provide a composite oxide film comprising $SiO_2$ and $TiO_2$. The composition of the composite oxide may vary from pure $SiO_2$ with a refractive index of 1.45 along the continuum to pure $TiO_2$ with a refractive index of 2.55. The resulting composite oxide film has a continuously graded refractive index as a function of thickness, with a maximum index modulation of 1.1.

EXAMPLE 3

This example illustrates the formation of a layer of a continuously graded index optical material on the surface of a glass substrate in which the index also varies in a predetermined pattern across the surface of the substrate, in accordance with the second process embodiment as previously described herein. The general procedure described in Example 1 is followed except that the source of radiation is a scanning laser beam comprising an argon-fluoride tunable excimer laser and associated electronics and optics obtained from Lumonics of New Jersey and a raster scanning mechanism obtained from General Scanning, Inc. of Watertown, Massachusetts. Under computer-control, the laser beam is scanned in a predetermined pattern across the horizontal surface of the substrate, as described in U.S. Patent No. 4,340,617, for example. There is deposited on the substrate a layer of a material, such as $SiO_x$, which has a continuously graded refractive index as a function of the thickness of the deposited layer and also a graded refractive index radially across the horizontal surface of the substrate in a pattern corresponding to the pattern of the scanning laser beam.

The afore described process is not limited to the photochemical vapor deposition of a continuously graded index layer of oxides of silicon, which was used merely as an example, but is intended to include oxides, nitrides, sulfides, and other materials and combinations thereof, with suitable optical properties. In addition, while the preferred process embodiment has been referred to as a "photochemical vapor deposition process", it is not intended to limit the afore described process to the process embodiment of U.S. Patent No. 4,371,587 in which atomic oxygen is photochemically generated; rather it is intended to include any oxide formed by any process embodiment of the latter patent.

Moreover, while the process has been described with reference to a particular photochemical vapor deposition process which is specifically controlled in order to form an oxide having a continuously graded refractive index in a predetermined pattern, it will be recognized that other known deposition processes for forming oxides, as well as other materials, may be similarly controlled to achieve a deposited layer having the same graded index profile and optical properties as described herein. Other materials which may be used to form the graded index layer are characterized by being dielectrics which are transmissive in the wavelength range of interest.

Further, the described process is not limited to the particular refractive index profiles specifically disclosed herein, but is intended to include any predetermined profile. In addition, it is not intended to limit the described process to the particular process details described herein, but to include any variations in process parameters as may be required in order to achieve the desired refractive index profile in the deposited material.

Finally, the afore-described process is not limited to the uses of the continuously graded index materials as specifically set forth herein, but includes structures comprising such continuously graded index

materials which may be used for any purpose.

After having described the known process for forming a graded index layer which is utilized in the present invention, a novel diffraction-type optical combiner in accordance with the present invention will be described with reference to Fig. 9.

The improved performance and relatively simple structure of the combiner 40 are well suited for applications such as HUDs or HVDs. The combiner 40 illustrated in FIG. 9 comprises a substrate 45, fabricated from a material such as glass or plastic. A diffraction coating 50 is formed on the surface 46 of the substrate, and may comprise a gelatin hologram or a graded-index coating. The graded-index coating is preferably formed in accordance with the photochemical vapor deposition process described hereinabove or some other deposition process. An antireflective coating 48 is formed on the other surface 47 of the substrate 45.

The surfaces 46 and/or 47 can have a plane or spherical contour, but preferably have an aspheric contour selected to compensate or balance aberrations in the display system in which the combiner 40 is employed. The coating 50 can provide a narrow band, high reflectivity response, similar to a conventional gelatin hologram formed on a spherical substrate. However, the gelatin hologram coating has improved optical performance over conventional gelatin holograms formed on spherical substrates. This improved performance results from the elimination of the slant fringes, the substrate contour providing the asphericity necessary for aberration compensation rather than the hologram itself. The considerations and principles which enter into determining the specific shaping of the aspherically contoured surface needed to achieve given design criteria are the same well-known considerations and principles which enter into determining the desired orientation of the fringes in a gelatin hologram with, of course, appropriate conventional compensation for any differences in refraction due to changes in the medium.

The added flexibility in the coating design and fabrication using graded index coatings allows the production of improved performance combiners, such as those used to make high see-through and multiple color displays, and thus has certain advantages over the gelatin hologram coating.

The graded-index coating can be applied directly on plastic surfaces such as polycarbonate, and is inert to environmental effects such as humidity and temperature in the normally specified ranges, unlike the gelatin hologram. These two characteristics enable the graded-index coating to be applied directly to the surface 46 of the substrate 45, which provides a major optical advantage. Since the surface 46 is the surface facing the observer's eye 58, as illustrated in FIG. 9, the combiner 40 substantially reduces the strong displaced second (ghost) image often encountered with a laminated gelatin holographic combiner. The intensity of the reflection from the second surface 47 is generally several orders of magnitude down from the intensity of the main image reflected from surface 46 and, therefore, is not a significant problem affecting the practical use of the combiner in a HUD or HVD system. Moreover, the antireflective (AR) coating 48 is applied only to surface 47 of the substrate 45, while the gelatin type of HUD or visor combiner requires AR coatings on both sides of the combiner.

The reduction in intensity of the ghost image is illustrated in FIG. 9. The display light source may typically comprise a CRT 55. The narrow band light generated by the CRT is incident on the combiner 40 along ray 56. The coating 50 may typically be adapted to reflect 80% of the incident light from the source 30 back along ray 57 to the observer's eye 58. The small portion of the display source light which is not reflected by the coating 20 is transmitted along ray 56a to the interface of the substrate 45 and the AR coating 48. A typical AR coating typically reflects only about .5% of the incident light and transmits the remaining light. The reflected light travels along ray 57a. The coating 50 reflects 80% of the light incident along the ray 57a and transmits only 20% of the incident light. The intensity of the second image along ray 57a is only (20%) (.5%) (20%), or .02% of the intensity of the light incident on the combiner 40 from source 55. Thus, the intensity of the reflected second image is far less than the intensity of the primary reflected image.

The ghost image performance of the combiner 40 illustrated in FIG. 9 is contrasted with a conventional gelatin holographic combiner, comprising at least five layers, two outer AR coatings formed on outer surfaces of two glass substrates, which in turn sandwich the gelatin hologram. Even assuming comparable performance for the AR coating (.5% reflectivity) and 80% reflectivity for the gelatin hologram at the wavelength of the source light, there are now five interfaces to be considered, and three significant components of the displaced image. The combined intensity of the three secondary components is .84%, or a factor of 40 higher as compared with .02% for the combiner shown in FIG. 9.

The combiner illustrated in FIG. 9 can also provide improved see-through performance, larger exit pupil size, multiple color and optimized display efficiency. These improved performances directly result from the flexible design and fabrication processes achievable through deposition techniques such as the photochemical vapor deposition process described above, which are capable of depositing coatings with graded-index

profiles.

For HVD or HUD applications, it is desirable for the viewer to see clearly the external environment through the visor or HUD combiner and that the color of the external scenes not be tinted by the combiner. This requires that only a small portion of the external light incident on the combiner be reflected by the diffraction coating on the combiner. If the reflectivity response of the combiner is not narrow band, or if there are significant sidelobes in the reflectivity response about the peak efficiency wavelength, then the external environment will appear tinted to the viewer and the see-through performance of the combiner will be degraded.

The index profile of a graded-index coating can be designed to provide a narrow band, high reflectivity spectral response with side-lobe reflection minimized so that the see-through performance is improved. This feature is illustrated in FIGS. 10 and 11.

FIG. 10 is a graph plotting the reflectivity function of both conventional gelatin holograms and graded-index holograms as a function of the wavelength of the incident light. In FIG. 10 the reflectivity of the gelatin hologram is indicated by the broken line and the reflectivity of the graded-index coating is indicated by the solid line. The index profile of the gelatin hologram is sinusoidal. However, the graded-index coating is designed to have a non-sinusoidal profile which will yield suppressed sidelobes in the spectral reflectance profile of the coating. Typical peak reflectivity values of 80%, centered at 543 nm, are readily achievable by both types of coatings. However, the gelain hologram reflectivity exhibits typical sidelobes of appreciable reflectivity for light outside the narrow band wavelength range of interest. The sidelobes in the reflectivity function indicate that considerable light from the external environment will be reflected by the combiner and not transmitted to the observer's eye, thus degrading the see-through performance. On the other hand, the graded-index coating can be designed and fabricated to minimize the sidelobes in the reflectivity response, so that the see-through performance, is improved.

By employing a graded-index coating with a particular non-sinusoidal index profile, the peak reflectivity response can be broadened so that a wider bandwidth $\Delta\lambda$ of wavelengths is reflected with at least 80% reflectivity. To achieve a corresponding broadening of the reflectivity response for a gelatin hologram coating would typically require higher peak reflectivity, and consequent increase in the sidelobe level, resulting in undesirable refraction in the sidelobe spectral region. This effect is illustrated in FIG. 11 where the solid line depicts the reflectivity response of a graded-index coating with a non-sinusoidal index profile and the upper broken line depicts the reflectivity response of a gelatin hologram designed to provide the same bandwidth but with higher peak efficiency of 95%.

The graded index coating allows great flexibility in balancing the bandwidth, sidelobe and reflectivity response of the combiner according to the requirements of particular applications. For example, a bandwidth $\Delta\lambda$ (as depicted in FIG. 11) on the order of 20-30 nm can be designed with acceptable reflectivity, and low sidelobe level. This allows the use of the phosphor P53 for the CRT light source, which emits light whose wavelength is centered at 543 nm within 5-10 nm range. This is in contrast to the P43 phosphor which is used in CRTs to emit light at wavelengths centered at 543 nm but within a 2-3 nm range. Thus, with the broadened reflectivity response, the image brightness may be increased.

The bandwidth increase achievable with non-sinusoidal graded-index coatings provides another performance advantage, an increase in the angular reflectivity function. The angular reflectivity function characterizes the reflectivity as a function of the angle of incidence for a given wavelength of the impinging light. If the reflectivity response is high over a wider band of incident angles, the exit pupil size is correspondingly larger.

The increase in exit pupil size can be maximized through control of two parameters. Increasing the magnitude of the index modulation (i.e., the difference between the highest and lowest index) through the thickness of the coating for a given non-sinusoidal, graded-index coating is found to result in broadening of the peak reflectivity response, and correspondingly the angular reflectivity bandwidth. Moreover, the graded-index coating can be fabricated from substances having a higher average index of refraction than the gelatin hologram. For example, a graded-index coating formed from layers of $SiO_x$ and $SiO_2$ can be designed with an average index of 1.75, compared to the typical gelatin hologram with an average index of about 1.50. This results in an exit pupil area which is about 30% larger than the gelatin hologram.

A requirement of a combiner used in a typical display system is that it be able to reflect light from the display source which is incident upon the combiner at angles of incidence which vary as a function of position on the combiner. A holographic or interference-type coating is designed to reflect a narrow band range of wavelengths and to transmit light of wavelengths outside the narrow band range. The narrow band range, centered at a particular wavelength, shifts as the angle of incidence is shifted from the normal direction. The center frequency at normal incidence is typically referred to as the hologram wavelength. Because the display source light typically is not incident normally at the combiner surface, and in fact the

angle of incidence varies across the surface of the combiner, the peak wavelength must be varied accordingly across the combiner in order to maximize the display efficiency. Both the holographic gelatin combiner and the graded-index combiner are able to meet this requirement.

The graded-index coating can be generated on the substrate so that the peak efficiency hologram wavelength varies at different points on the combiner to achieve maximum display efficiency in the designed viewing area. This effect is illustrated in FIG. 12. The optical combiner 60 comprises a substrate 61 on which a graded-index coating 62 is formed. A display source 63 generates display light at wavelength $\lambda_o$. Three rays 64, 65, 66 of the display light are shown incident across the surface of the coating 62 formed on the combiner 60. The respective non-equal angles of incidence for rays 64, 65, 66 are $\theta_1$, $\theta_2$, $\theta_3$. At the points of incidence, the respective hologram wavelengths are $\lambda_1$, $\lambda_2$, $\lambda_3$, designed such that the peak efficiency wavelength reflected back to the observer's eye at the respective non-normal angles of incidence $\theta_1$, $\theta_2$, $\theta_3$ is $\lambda_o$.

The same effect can be obtained by using an aspheric substrate contour with any diffraction coating, such as a gelatin coating, or to combine the aspheric substrate contour with a graded-index coating.

Thus, the combiner 40, in accordance with the invention, may comprise a substrate having an aspheric surface, and a diffraction type reflective coating for reflecting radiation within one or more predetermined narrow band ranges of wavelengths impinging on the layer. The coating can comprise a gelatin hologram or other type of diffraction coating. The preferred embodiment, however, comprises an aspheric substrate of a lightweight plastic material, on which a graded-index coating is formed. The asphericity can be designed in accordance with the requirements of a specific optical system to compensate or balance optical aberrations in the system. Moreover, the graded-index profile can be designed to provide specific reflectivity responses, to provide multiple color capability, improved see-through, enlarged pupil size, and increased efficiency.

The fabrication of aspheric plastic substrates is well known in the opthalmic art. The aspheric surface is formed, for example, by a casting process, utilizing a master (for example, glass or metal) having the aspheric surface formed thereon by conventional grinding and polishing techniques. The master is then employed to make a nickel plate replica, one for each surface of the substrate (each surface may have a different contour). The nickel plate replicas of the surfaces may then be utilized to cast a plastic substrate.

This method for fabricating the plastic substrate is generally illustrated in FIGS. 13 and 14. A desired aspheric surface contour 106 is formed on a glass substrate 105 to define glass master 105. Using the glass master, the nickel plate replica 110 of the surface contour 106 is formed, also by conventional techniques known to those skilled in the art.

By the same process, a second nickel plate replica 110a can be formed using a second master. The two nickel replicas 110, 110a may then be employed as cast surfaces to cast a premeasured quantity of an unpolymerized acrylic (or CR-39) compound 115 into a substrate whose contours replicate the contours of the nickel replica 110, 110a. The casting method includes disposing a compressible gasket retainer 120 around the periphery of the contours 106, 106a, sandwiching the quantity of unpolymerized acrylic compound 115 between the two plates and retained by the gasket 120, setting the plates in an elevated temperature bath so that the acrylic compound polymerizes, usually shrinking by about 13%, to assume the contours 110, 110a. The plates may then be removed from the elevated temperature bath and separated to remove the formed casting.

The casting method provides a relatively low-cost technique to fabricate the aspheric substrates in production quantities. The parts may also be fabricated by injection molding. In contrast, fabrication of aspheric glass substrates in production quantities would be prohibitively expensive using conventional techniques.

One application to which a combiner as illustrated in FIG. 9 may be advantageously employed is in helmet mounted visor displays (HVDs) used by aircraft flight personnel. As is known, images from a light source such as a CRT may be used to display symbology information or reticle information on a see-through visor, so that the symbology is presented to the helmet wearer as he is viewing the external environment through the visor.

The general arrangement of a binocular visor system in accordance with the invention is illustrated in the schematic block diagram of FIG. 15. In this figure, light is shown emanating from an object source 210, which may be a CRT, and directed by an image folding prism 211 via a relay lens 212 to a beam splitter 213. The beam path from the source 210 to the image folding prism 211 is shown unfolded for convenience of illustration. At the beam splitter 213, the incident light is split into two beams by splitter 213, which directs the beams laterally to a pair of folding members, shown as wing mirrors 214.

The mirrors 214 redirect the respective beams through a plastic window 216 toward the respective aspheric mirrors comprising the combiners 215 which are optical elements as shown in FIG. 9. The selectively reflective properties of the combiners 215 cause the object source light to be redirected toward

the user's eyes through exit pupils 217. Each eye views the image at the corresponding exit pupil as a virtual image at infinity. The intermediate images, represented by the broken lines 216, are developed between the relay lens 212 and the combiners 215.

One specific, preferred HVD embodiment is represented schematically in further detail in FIGS. 16-18. The arrangement of the principal elements of the binocular system is shown in FIG. 16 in relation to the wearer's head, with the helmet omitted for simplicity. The system comprises a minature cathode ray tube (CRT) source having a flat display element 220 bearing a phosphor on its inner surface 221. As indicated in FIG. 16, the normal to the CRT plate 220 is aligned at 27.039° to the reference line 222 of the system.

Folding prism 223 is adjacent the CRT 220. The entrance face 224 of the prism 223 is orthogonal to the reference line 222, while the exit face 225 is at a wedge angle of 4.554° to the reference line 222. The light from the cathode ray tube is internally reflected within the prism 223 which is spaced so that the entrance face 224 is located at a point which is .411 inches from a zero reference line 226, which is orthogonal to the reference line 222 at the outer surface of the CRT face 220.

Next to the folding prism 223 is the relay lens 227 comprising three lenses 228, 229, 230 in a modified Cooke triplet, together with a fourth lens 231. The two outer lenses 228 and 231 of the relay lens 227 have aspheric surfaces while the lens 230 is a meniscus lens with spherical surfaces. The mounting of the relay lens off-axis serves to bend the axial ray 232 into coincidence with the reference line 222.

The light transmitted by the relay lens 227 is then directed to a beam splitting prism 223. The front surfaces 235 (FIGS. 16 and 17) have a concave curvature. The prism 233 splits the light transmitted by the relay lens 227 into a pair of laterally directed images. These images are reflected by wing mirrors 236, 237 (shown in FIG. 17) on opposite sides of the beam splitting prism 233 and sent to the respective combiners 240 through window 238 employed to seal the relay optics from the external environment. Rays from a particular field point are reflected by the combiner 240 toward the user's eye through an exit pupil 248 (represented by lines 248 in FIG. 16 and FIG. 17).

The view in FIG. 17 is taken from the upper right of FIG. 16, parallel to the reference line 222 and the aligned faces of the folding prism 223 and beam splitting prism 233. For simplicity, the wing mirrors 236 and 237 are not shown in FIG. 16.

The axis (represented by line 227a) of the relay lens 227 comprising the lens elements 228-231 is at an angle of 8.630 degrees to the reference line 222, and the point at which the axis 227a intersects the surface 228a is displaced from the reference line 222 by 0.22 inches.

As indicated in FIG. 16, the aspheric lens 228 is mounted such that the point at which its surface 228a is intersected by the axial ray 232 is located 1.645 inches from the zero reference line 226. The face 234 of the prism 233 is 2.941 inches from the zero reference line 226, while the point at which the reflected axial ray 232 exits the combiner 240 is 7.526 inches from the zero reference line 226. The combiner 240 is oriented such that its element axis in the plane of FIG. 16 forms an angle of 30.431 degrees with the path of the axial ray exiting the combiner 240 (extending in the direction of the exit pupil 248).

The location of the wing mirrors 236 and 237 is limited in the disclosed embodiment by a requirement for a 40° see-through capability and the necessary head clearance. This in turn fixes the location of the beam splitting prism 233. First order and packaging consideration (especially the need for a long back focus to allow the inclusion of the fold prism 223) dictate that the aperture stop fall slightly before the prism 233. This is also one of the positions of the aperture stop for which the relay lens 227 can most readily be designed for superior performance. However, with minor modifications of the design, the aperture stop may be located before or within the relay lens 117 if desired.

Sufficient eye relief has been incorporated into the display system to allow the user to wear glasses and a standard oxygen mask. Given the eye relief and aperture stop location desired, the focal length of the combiner 240 and the magnification of the relay lens 227 are readily determinable. Because the user looks through the combiner 240, see-through distortion is carefully controlled.

A summary of the optical characteristics of the particular embodiment of the display system depicted in FIGS. 15-19 is set forth in Table I.

TABLE I

| Parameter | Value |
|---|---|
| System | |
| Horizontal field of view | 40° |
| Vertical field of view | 30° |
| Exit pupil width (truncated circle) | 15mm |
| Exit pupil height (truncated circle) | 10mm |
| Effective focal length | 21.6mm |
| Horizontal f-number | 1.44 |
| Vertical f-number | 2.16 |
| Eye Relief | 98mm |
| CRT diameter | 19mm |
| Exit pupil separation | 62.5mm |
| Wavelength | 542-550 |
| Internal | |
| Combiner focal length | 50.8mm |
| Combiner f-number | 3.4 |
| Combiner bend angle | 60.8° |
| Relay lens f-number | 1.01 |
| Relay lens field of view | 37° |
| Approximate relay lens width | 29mm |

It will be apparent to those skilled in the art that the various parameters set forth above with respect to the particular embodiment depicted in FIGS. 15-18 are selected in accordance with acceptable design principles and may be varied in accordance therewith, in a manner well known to those skilled in the art, to adapt the design to various applications and specifications without departing from the scope of the present invention. Other parameters of the system, not specified, such as the prescriptions for the lens surfaces of the relay lens 227 and the surface of combiner 240, may be chosen in accordance with such principles to satisfy any particular design specifications. These principles are understood to those skilled in the art, as evidenced by optical engineering textbooks such as "Modern Optical Engineering," by Warren J. Smith (McGraw-Hill, Inc. 1966). It will also be apparent to those skilled in the art that separate optical channels, each with a design similar to that illustrated in FIGS. 15-17, can be used to provide a separate display to each eye by simply eliminating the foldng mirror 236 and prism 233. This dual separate channel configuration provides the capability for a stereoscopic display system.

The HVD system depicted in FIGS. 15-19 has substantial advantages over the HVD systems employing gelatin holograms. The enhanced optical performance achieved by graded-index combiners is one such advantage. While the specific performance parameters to be optimized are application dependent, it is apparent that the aspheric combiner can be optimized to provide improved image quality substantially resulting from the minimization of the flare and chromatic dispersion inherent in a gelatin holographic combiner, larger exit pupil size, improved see-through and efficiency, larger field of view and elimination of

ghost images. Moreover, the combiner can be fabricated from lightweight polycarbonate, substantially reducing the weight of the combiner and the burden on the visor wearer.

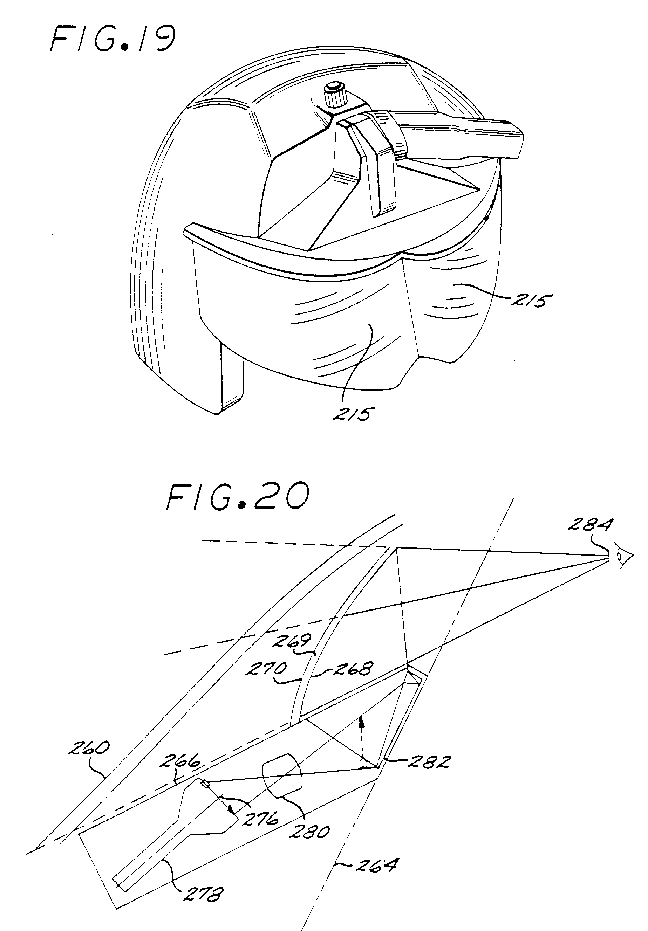

Another application for a combiner as shown in FIG. 9 is in head-up displays (HUDs) for aircraft cockpit use. A general schematic diagram of a HUD employing the novel combiner is depicted in FIG. 20. The aircraft has a canopy 260 and a surface 266. A combiner 270 comprises a substrate 269 and a diffraction-type coating 268. A cathode ray tube 278 provides an image source at object plane 276. The object plane is imaged through a relay lens 280 to a folding prism 282 having a surface angled to direct the rays over the surface of the combiner 270. The rays are then diffracted by the combiner 270 to the pilot's eye 284.

A head-up display employing the combiner comprising an aspheric substrate and graded-index diffractive coating has several advantages over systems employing gelatin holographic coatings. One advantage is the weight reduction, resulting from the elimination of the glass layers which are typically employed to protect the gelatin hologram. With a plastic substrate, the weight savings can be significant. Further, the plastic substrate does not present the safety risk of shattered glass inherent in gelatin holograms combiners; with a plastic substrate the combiner is birdstrike safe. This in turn permits the combiner to be located closer to the canopy than is permitted with glass combiners, allowing the design of head-up displays with greater look-up capability. Other advantages of the head-up display system employing the aspheric combiner are reduced see-through distortion and ghost images and improved image quality. Moreover, the lower cantilevered mass of the lightweight combiner increases the stiffness of the combiner and reduces its sensitivity to vibration.

The following summarizes some of the advantages resulting from combiners fabricated in accordance with the principles discussed herein:

a. the strong double image due to the first surface reflection in a gelatin combiner is eliminated because the graded-index coating is located on the outermost surface. This placement of the graded-index coating also eliminates the need for an antireflective coating on one side of the combiner;

b. the combiner can provide improved optical performance such as higher see-through and efficiency and larger exit pupil area and field of view due to the flexibility in coating design and fabrication;

c. the combiner is a lightweight assembly because only one substrate is used, which may be lightweight polycarbonate instead of glass. No cover lamination is needed, as compared with the gelatin HUD or visor display;

d. it is easier to fabricate a multiple-color HUD combiner or visor display combiner;

e. the combiner eliminates image-degrading flare and chromatic dispersion caused by slanted fringes in holographic gelatin combiners, which allows the use of broader-band display sources (CRTs) resulting in brighter, more efficient displays;

f. the graded-index combiner with an oxide coating is environmentally stable and may, therefore, be applied on plastic, as well as on glass substrates;

g. the fabrication of the combiner is more cost-effective on a production level than gelatin combiners. Tooling costs may also be lower;

h. the reduced combiner thickness results in less see-through distortion even when both surfaces are asperic;

i. with only one wedge tolerance to consider instead of several, there is less difficulty in eliminating fabrication related see-through distortion, boresight error and, in the case of helmet visor displays, binocular disparity;

j. for head-up displays, the lower cantilevered mass of the lightweight combiner makes the combiner stiffer and less vibration sensitive;

k. the plastic substrate of the combiner provides a quality of being birdstrike-safe, thereby providing the capability of designing a head-up display with enhanced look-up capability;

l. the combiner when used in a helmet visor display is lighter weight than gelatin hologram visors, and has reduced see-through distortion and ghost images, with an overall improved optical MTF and image resolution.

Although the invention has been described with reference to specific embodiments, the exact nature and scope of the invention is defined in the following claims.

## Claims

**1.** An optical combiner (40) comprising:

a substrate (45) having at least one aspheric surface (46 or 47) and a second surface (47 or 46);

a graded index coating (50) applied to one surface (46) of said substrate (45) for providing a selectively reflective optical function; characterized by

a single broad band antireflective coating (48) applied to the other surface (47) of said substrate (45) to minimize reflection of incidident radiation in the visible wavelength range,

said graded index coating (50) and said antireflective coating (48) sandwiching said substrate (45) and forming the respective outer surfaces of said combiner (40).

**2.** The combiner of claim 1 wherein said graded-index coating (50) comprises a plurality of materials deposited on said substrate to a predetermined thickness wherein said coating as deposited has a stoichiometric composition which varies in a predetermined pattern as a function of said thickness to produce successive gradiations in the index of reflection in said layer in said predetermined pattern.

**3.** The combiner of claim 1 wherein said graded-index coating (50) comprises a selected plurality of materials deposited on said substrate to a thickness having a predetermined profile wherein the stoichiometric composition of said coating as deposited varies in a first predetermined pattern as a function of thickness and in a second predetermined pattern laterally across said substrate to produce successive gradiations in said index of refraction in said first and second predetermined patterns as a function of said thickness and as a function of the lateral position on said substrate (45).

**4.** The combiner of claim 1 wherein said substrate (45) is formed of plastic material.

**5.** The combiner of claim 4 wherein said plastic material is polycarbonate.

**6.** The combiner of claim 1 wherein the asphericity of said substrate surface is designed to compensate optical aberrations.

**7.** The combiner of claim 1 wherein said graded-index coating (50) is of uniform thickness.

**8.** The combiner of claim 2 wherein said gradiations in the index of refraction of said coating (50) varies in a predetermined periodic pattern.

**9.** The combiner of claim 8 wherein said predetermined periodic pattern is a non-sinusoidal pattern.

**10.** The combiner of claim 9 wherein the magnitude of the modulation in the index is increased to broaden the bandwidth of the peak reflectivity of the coating (50).

**11.** The combiner of claim 8 wherein said predetermined periodic pattern comprises a linear superpositioning of a plurality of sinusoidal patterns selected to produce multiple peaks in the spectral reflectivity response of said combiner.

**12.** The combiner of claim 9 wherein the average index is greater than about 1.54.

**13.** A head-up display comprising an image source and an optical combiner according to claims 1 through 12, interposed between the user and the external scenery for selectively reflecting light from the image source to the user.

**14.** A binocular display apparatus for mounting on a helmet to provide binocular images combined with external images received by a helmet visor comprising:

a generally transparent visor for mounting on said helmet having dual optical combiner elements (240) in the form of the combiner according to claims 1 through 12, oriented at a selected angle;

an object source (220) mounted adjacent the helmet for providing a display;

beam splitting means (233) for splitting incident light from the object source (220) into separately directed beams;

means (227) between the object source (220) and the splitting means (233) for directing light from the object source to the splitting means; and

fold means (237, 236) between the splitting means (233) and the combiner elements (240) for directing the beams from the splitting means (233) toward the respective combiner elements (240).

**15.** The display apparatus of claim 14 wherein the directing means (227) is a relay lens comprising a modified Cooke triplet (228, 229, 230) including aspheric lens surfaces and a further lens element including aspheric surfaces.

**16.** The display apparatus of claim 15 wherein the relay lens (227) is off-axis.

**17.** The display apparatus of claim 14 wherein the object source (220) is tilted with respect to the directing means (227).

**18.** The display apparatus of claim 14 wherein the directing means (227) comprises a folding prism (223) having an entrance face (224) orthogonal to an optical axis of the apparatus and an exit face (225) at a wedge angle to said axis.

**19.** The display apparatus of claim 14 wherein the beam splitting means (223) has concave exit surfaces (235).

**Revendications**

**1.** Combinateur optique (40), comprenant :
- un substrat (45) ayant au moins une surface asphérique (46 ou 47) et une deuxième surface (47 ou 46) ;
- un revêtement à gradient d'indice (50) appliqué sur une surface (46) dudit substrat (45) pour remplir une fonction optique de réflectivité sélective, caractérisé en ce qu'il comporte un seul revêtement antiréfléchissant à large bande (48) appliqué sur l'autre surface (47) dudit substrat (45) pour réduire au minimum la réflexion du rayonnement incident dans la gamme des longueurs d'onde visibles, et en ce que ledit revêtement à gradient d'indice (50) et ledit revêtement antiréfléchissant (48) prennent en sandwich ledit substrat (45) et forment les surfaces extérieures respectives dudit combinateur (40).

**2.** Combinateur selon la revendication 1, dans lequel ledit revêtement à gradient d'indice (50) comprend plusieurs matières déposées sur ledit substrat avec une épaisseur prédéterminée, et dans lequel ledit revêtement déposé a une composition stoechiométrique qui varie selon un motif prédéterminé en fonction de ladite épaisseur pour produire des gradations successives de l'indice de réfraction dans ledit revêtement selon ledit motif prédéterminé.

**3.** Combinateur selon la revendication 1, dans lequel ledit revêtement à gradient d'indice (50) comprend un ensemble sélectionné de matières déposées sur ledit substrat avec une épaisseur ayant un profil prédéterminé, et dans lequel la composition stoechiométrique dudit revêtement déposé varie selon un premier motif prédéterminé en fonction de l'épaisseur, et selon un deuxième motif prédéterminé latéralement dans ledit substrat pour produire des gradations successives dudit indice de réfraction selon lesdits premier et deuxième motifs prédéterminés en fonction de ladite épaisseur et en fonction de l'emplacement latéral sur ledit substrat (45).

**4.** Combinateur selon la revendication 1, dans lequel ledit substrat (45) est constitué de matière plastique.

**5.** Combinateur selon la revendication 4, dans lequel ladite matière plastique est du polycarbonate.

**6.** Combinateur selon la revendication 1, dans lequel l'asphéricité de ladite surface du substrat est conçue pour compenser des aberrations optiques.

**7.** Combinateur selon la revendication 1, dans lequel ledit revêtement à gradient d'indice (50) a une

épaisseur uniforme.

8. Combinateur selon la revendication 2, dans lequel lesdites gradations de l'indice de réfraction dudit revêtement (50) varient selon un motif périodique prédéterminé.

9. Combinateur selon la revendication 8, dans lequel ledit motif périodique prédéterminé est un motif non sinusoïdal.

10. Combinateur selon la revendication 9, dans lequel l'amplitude de la modulation de l'indice de réfraction est augmentée pour augmenter la largeur de bande de la réflectivité maximale du revêtement (50).

11. Combinateur selon la revendication 8, dans lequel ledit motif périodique prédéterminé comprend une superposition linéaire de plusieurs motifs sinusoïdaux sélectionnés pour produire des pics multiples dans la courbe de réponse de réflectivité spectrale dudit combinateur.

12. Combinateur selon la revendication 9, dans lequel l'indice de réfraction moyen est supérieur à environ 1,54.

13. Afficheur frontal, comprenant une source d'images et un combinateur optique selon les revendications 1 à 12 interposé entre l'utilisateur et la scène extérieure pour réfléchir sélectivement la lumière issue de la source d'images vers l'utilisateur.

14. Dispositif d'affichage binoculaire pour montage sur un casque pour présenter des images binoculaires combinées avec des images extérieures reçues par une visière de casque, comprenant :
   - une visière globalement transparente pour montage sur ledit casque ayant des éléments combinateurs optiques doubles (240) réalisés sous la forme du combinateur selon les revendications 1 à 12, orientés sous un angle sélectionné ;
   - une source objet (220) monté voisine du casque pour fournir un affichage ;
   - des moyens formant diviseur optique (233) pour diviser la lumière incidente issue de la source objet (220) en faisceaux dirigés séparément ;
   - des moyens (227) disposés entre la source objet (220) et les moyens formant diviseur optique (233) pour diriger la lumière issue de la source objet vers lesdits moyens formant diviseur optique ; et
   - des moyens de renvoi (237, 236) disposés entre les moyens formant diviseur optique (233) et les éléments combinateurs (240) pour diriger les faisceaux issus desdits moyens formant diviseur optique (233) vers les éléments combinateurs respectifs (240).

15. Dispositif d'affichage binoculaire selon la revendication 14, dans lequel les moyens pour diriger (227) sont constitués par une lentille relais comprenant un triplet de Cooke modifié (228, 229, 230) comportant des surfaces de lentille asphériques, et un autre élément formant lentille comportant des surfaces asphériques.

16. Dispositif d'affichage selon la revendication 15, dans lequel la lentille relais (227) est désaxée.

17. Dispositif d'affichage selon la revendication 14, dans lequel la source objet (220) est inclinée par rapport aux moyens pour diriger (227).

18. Dispositif d'affichage selon la revendication 14, dans lequel les moyens pour diriger (227) comprennent un prisme de renvoi (223) ayant une face d'entrée (224) orthogonale à un axe optique du dispositif et une face de sortie (225) formant un angle aigu avec ledit axe.

19. Dispositif d'affichage selon la revendication 14, dans lequel les moyens formant diviseur optique (223) ont des surfaces de sortie concaves (235).

**Patentansprüche**

1. Optischer Kombinator (40) mit:

einem Substrat (45), welches wenigstens eine asphärische Oberfläche (46 oder 47) und eine zweite Oberfläche (47 oder 46) aufweist;

einer Beschichtung (50) mit abgestuftem Brechungsindex, die auf einer Oberfläche (46) des Substrats (45) aufgebracht ist, um eine selektiv reflektierende optische Funktion bereitzustellen; gekennzeichnet durch

eine einzelne Breitband- Antireflexbeschichtung (48), welche auf die andere Oberfläche (47) des Substrats (45) aufgebracht ist, um die Reflexion von einfallender Strahlung in dem sichtbaren Wellenlängenbereich zu minimieren, wobei

die Beschichtung (50) mit abgestuftem Brechungsindex und die Antireflexbeschichtung (48) das Substrat (45) zwischen sich enthalten und nach außen hin begrenzen, und dabei die jeweiligen äußeren Oberflächen des Kombinators (40) bilden.

**2.** Kombinator nach Anspruch 1, worin die Beschichtung (50) mit abgestuftem Brechungsindex eine Mehrzahl von Materialien enthält, die auf das Substrat in einer vorherbestimmten Dicke aufgebracht werden, wobei die aufgebrachte Beschichtung eine stoichiometrische Zusammensetzung aufweist, die in einem vorherbestimmten Muster als eine Funktion der Dicke variiert, um aufeinanderfolgende Abstufungen in dem Brechungsindex der Schicht in dem vorherbestimmten Muster zu erzeugen.

**3.** Kombinator nach Anspruch 1, worin die Schicht (50) mit abgestuftem Brechungsindex eine ausgewählte Mehrzahl von Materialien aufweist, die auf das Substrat in einer Dicke aufgebracht werden, die ein vorherbestimmtes Profil hat, wobei die stoichiometrische Zusammensetzung der aufgebrachten Beschichtung in einem ersten vorherbestimmten Muster als eine Funktion der Dicke variiert, und in einem zweiten vorherbestimmten Muster lateral über das Substrat, um aufeinanderfolgende Abstufungen in dem Brechungsindex in dem ersten und zweiten vorherbestimmten Muster als eine Funktion der Dicke und als eine Funktion der lateralen Position auf dem Substrat (45) zu erzeugen.

**4.** Kombinator nach Anspruch 1, worin das Substrat (45) aus einem Plastikmaterial hergestellt ist.

**5.** Kombinator nach Anspruch 4, worin das Plastikmaterial Polycarbonat ist.

**6.** Kombinator nach Anspruch 1, worin die Asphärizität der Substratoberfläche entworfen ist, um optische Aberrationen zu kompensieren.

**7.** Kombinator nach Anspruch 1, worin die Beschichtung (50) mit abgestuftem Brechungsindex von einheitlicher Dicke ist.

**8.** Kombinator nach Anspruch 2, worin die Abstufungen in dem Brechungsindex der Beschichtung (50) in einem vorherbestimmten periodischen Muster variieren.

**9.** Kombinator nach Anspruch 8, worin das vorherbestimmte periodische Muster ein nicht-sinusförmiges Muster ist.

**10.** Kombinator nach Anspruch 9, worin die Größe der Modulation des Indexes erhöht wird, um die Bandbreite der Spitzenwertreflektivität der Beschichtung (50) zu verbreitern.

**11.** Kombinator nach Anspruch 8, worin das vorherbestimmte periodische Muster eine lineare Superposition einer Mehrzahl von sinusförmigen Mustern enthält, die ausgewählt wurden, um mehrere Spitzenwerte im spektralen Reflektivitätsverhalten des Kombinators zu erzeugen.

**12.** Kombinator nach Anspruch 9, worin der mittlere Index größer als ungefähr 1,54 ist.

**13.** Head-up Display, welches eine Bildquelle und einen optischen Kombinator nach einem der Ansprüche 1 bis 12 enthält, welche zwischen dem Anwender und der externen Szenerie angeordnet sind, um selektiv Licht von der Bildquelle zum Anwender zu reflektieren.

**14.** Stereoanzeigenvorrichtung zur Befestigung auf einem Helm, um Stereobilder bereitzustellen, welche mit externen Bildern kombiniert werden, die mittels eines Helmvisieres empfangen werden, mit:

einem im wesentlichen transparenten Visier zur Befestigung auf dem Helm, welches doppelte optische Kombinatorelemente (240) in der Form des Kombinators nach einem der Ansprüche 1 bis 12 aufweist, die unter einem bestimmten Winkel angeordnet sind;

eine Objektquelle (220), welche neben dem Helm befestigt ist, um eine Anzeige bereitzustellen;

Strahlteilervorrichtungen (233) zum Aufteilen des einfallenden Lichtes von der Objektquelle (220) in separat geführte Strahlen;

Vorrichtungen (227) zwischen der Objektquelle (220) und den Teilervorrichtungen (233), um Licht von der Objektquelle zu den Teilervorrichtungen zu führen; und

Faltvorrichtungen (237, 236) zwischen den Teilervorrichtungen (233) und den Kombinatorelementen (240), um die Strahlen von den Teilervorrichtungen (233) zu den jeweiligen Kombinatorelementen (240) zu führen.

**15.** Anzeigenvorrichtung nach Anspruch 14, worin die Vorrichtungen zum Führen (227) eine Relaislinse ist, welche ein modifiziertes Cooke Triplet (228, 229, 230) aufweist, das asphärische Linsenoberflächen enthält, sowie ein weiteres Linsenelement, das asphärische Oberflächen aufweist.

**16.** Anzeigenvorrichtung nach Anspruch 15, worin die Relaylinse (227) "off-axis" angeordnet ist.

**17.** Anzeigenvorrichtung nach Anspruch 14, worin die Objektquelle (220) bezüglich den Vorrichtungen (227) zum Führen verkippt ist.

**18.** Anzeigenvorrichtung nach Anspruch 14, worin die Vorrichtung (227) zum Führen ein Faltprisma (223) aufweisen, welches eine Eintrittsfläche (224) hat, die orthogonal zu einer optischen Achse der Vorrichtung ist, und eine Austrittsfläche (225), die sich unter einem Einzugswinkel zu der Achse befindet.

**19.** Anzeigenvorrichtung nach Anspruch 14, worin die Strahlteilervorrichtungen konkave Austrittsoberflächen (235) aufweisen.

Fig. 1. (prior art)

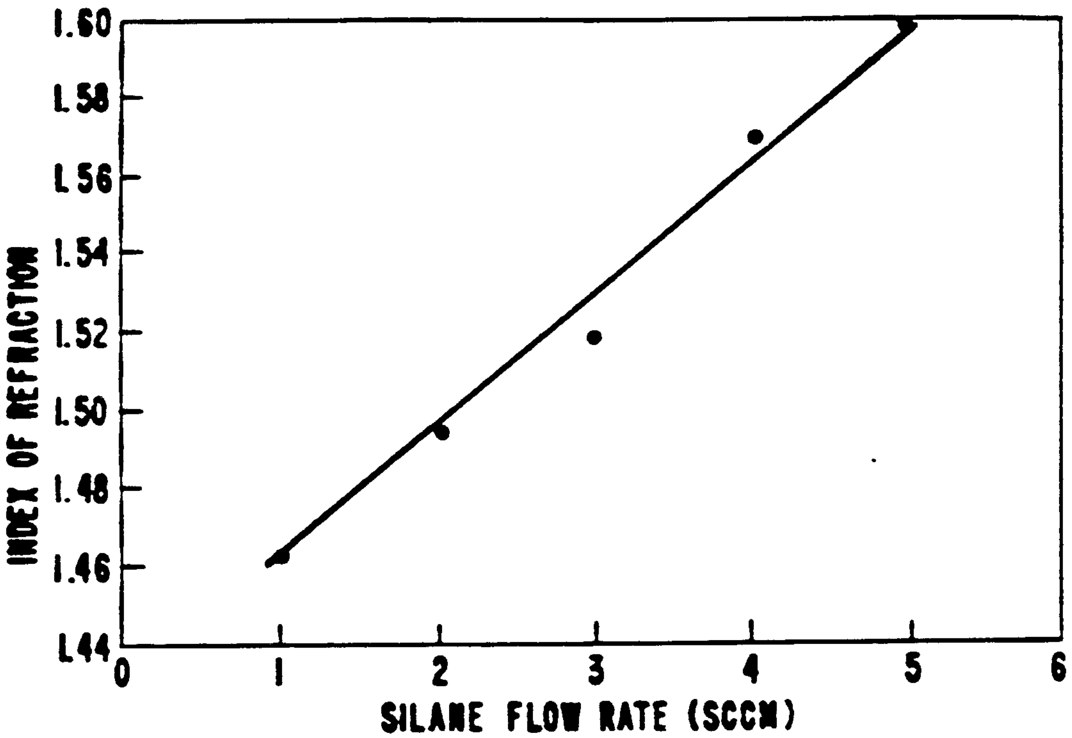


Fig. 2. (prior art)

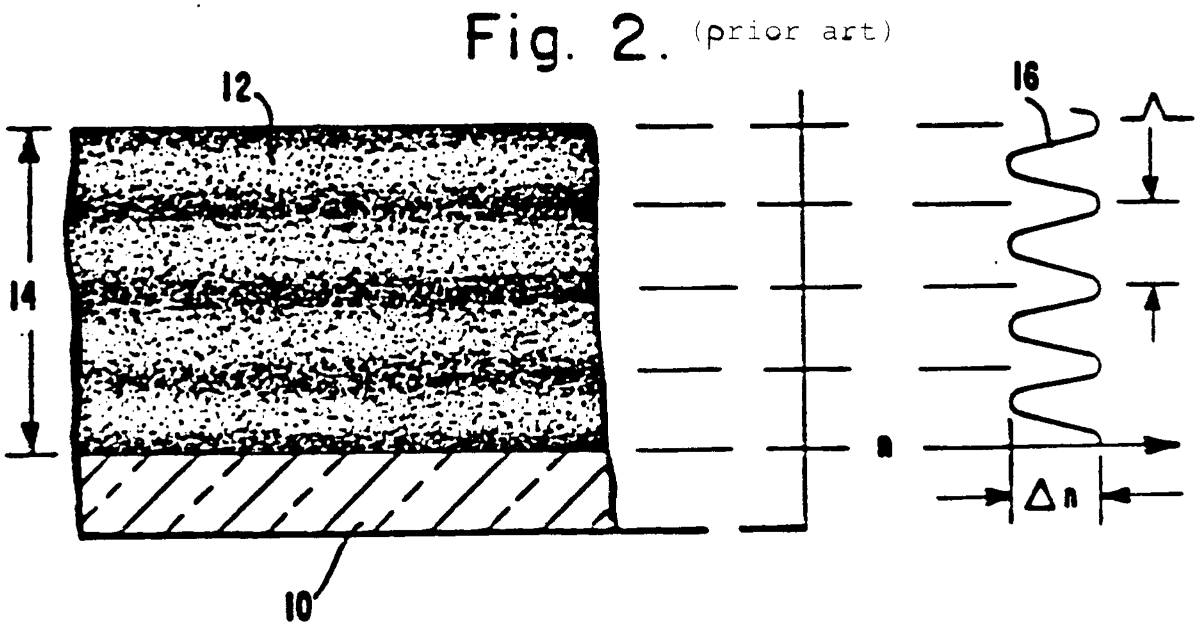

Fig. 3. (prior art)

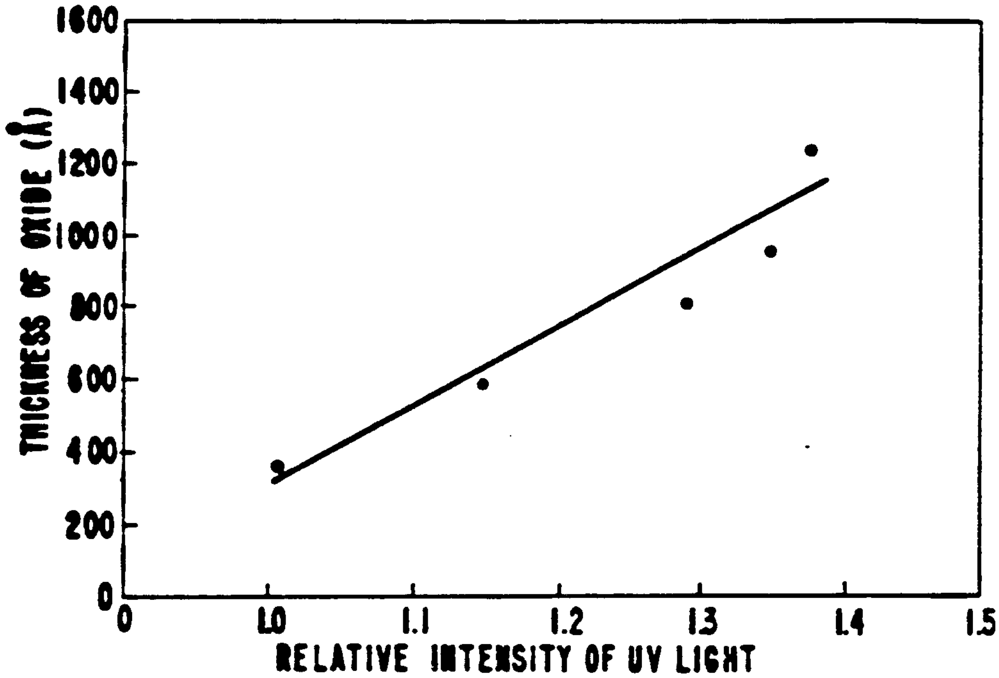


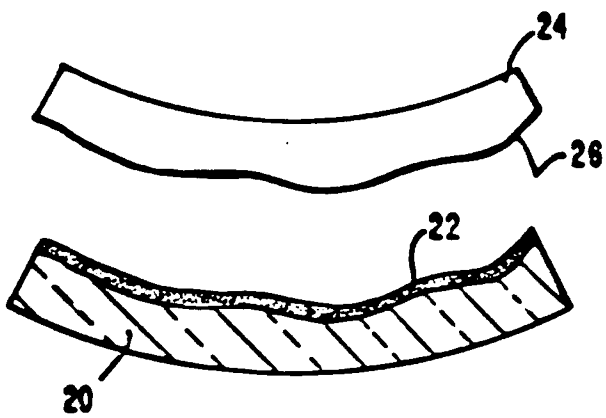


Fig. 4a. (prior art)

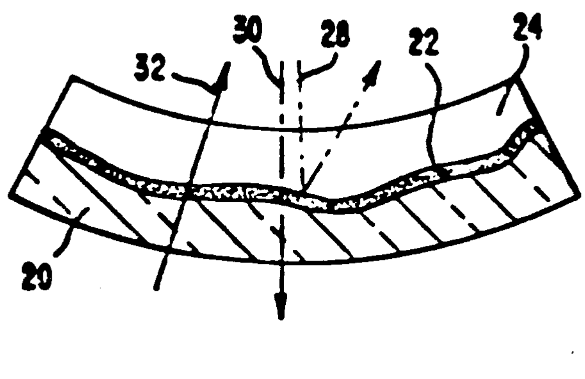


Fig. 4b. (prior art)

Fig. 5. (prior art)

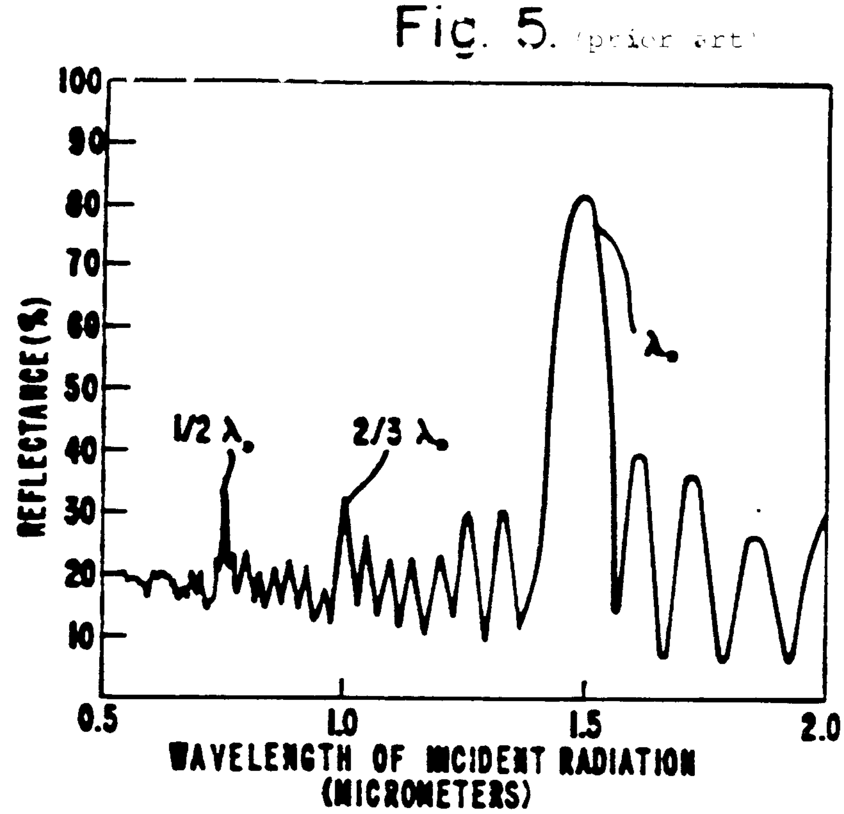


Fig. 6. (prior art)

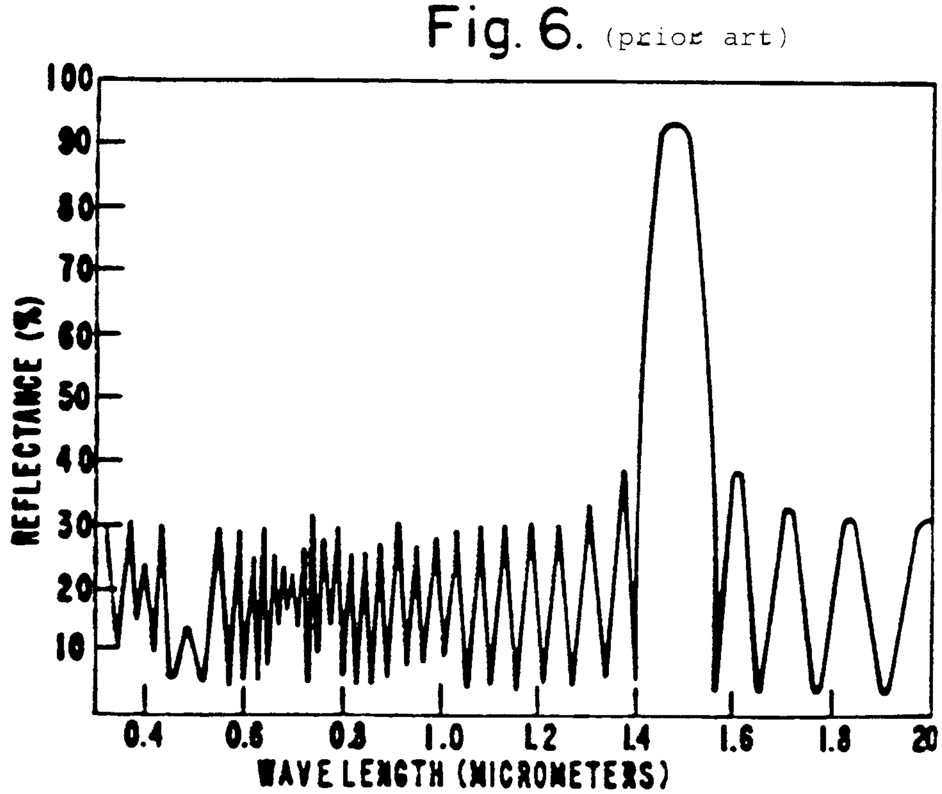

Fig. 7. (prior art)

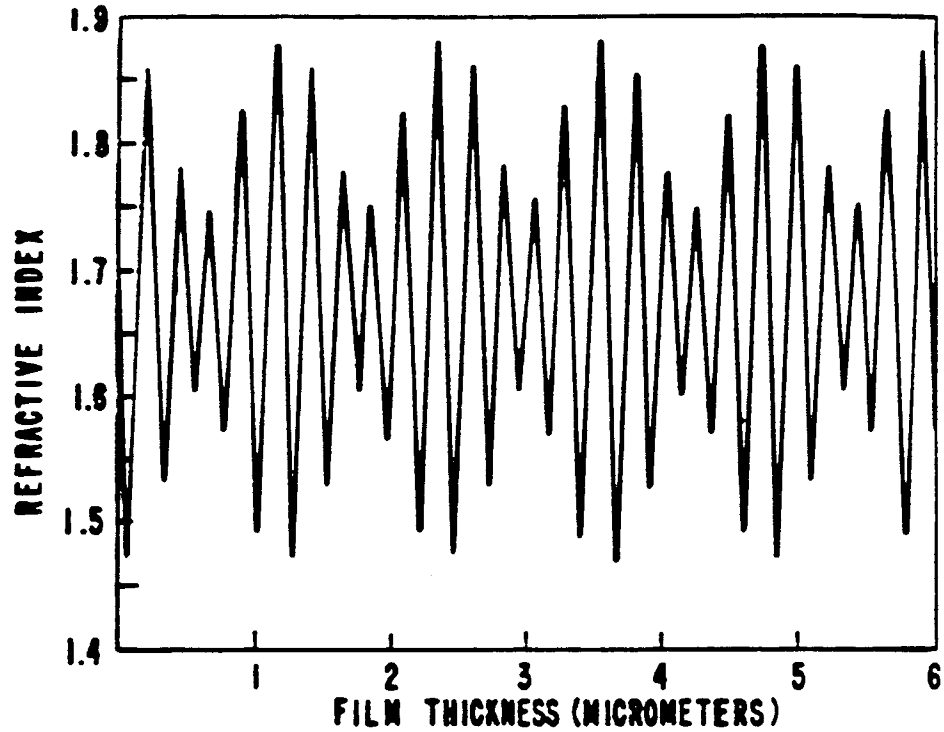


Fig. 8. (prior art)

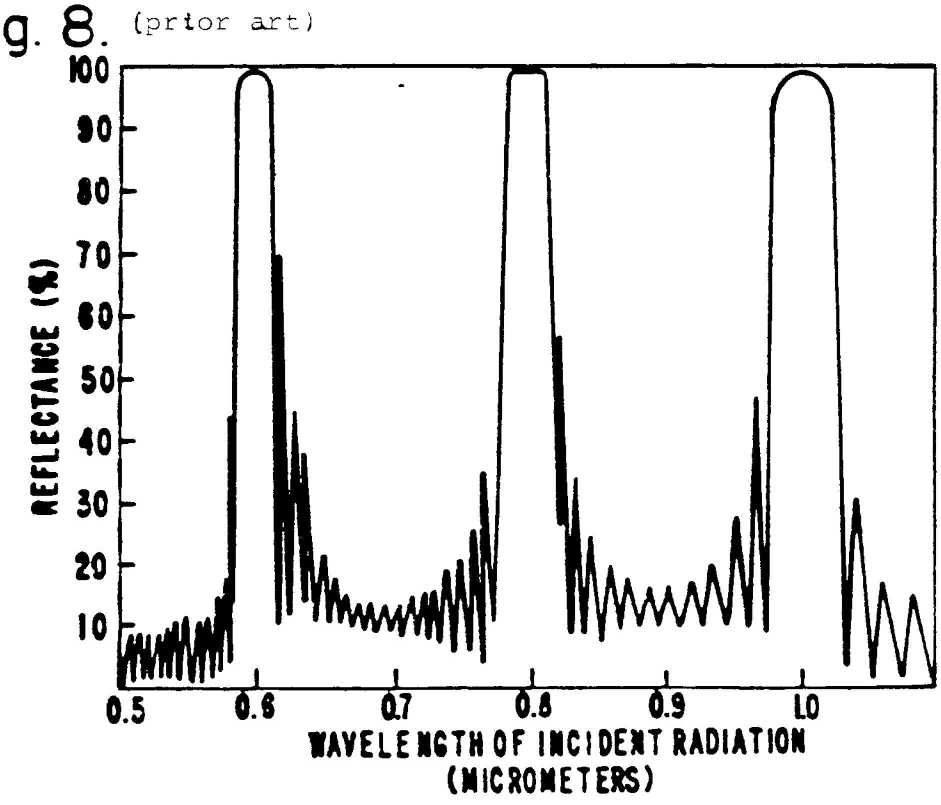

FIG. 9

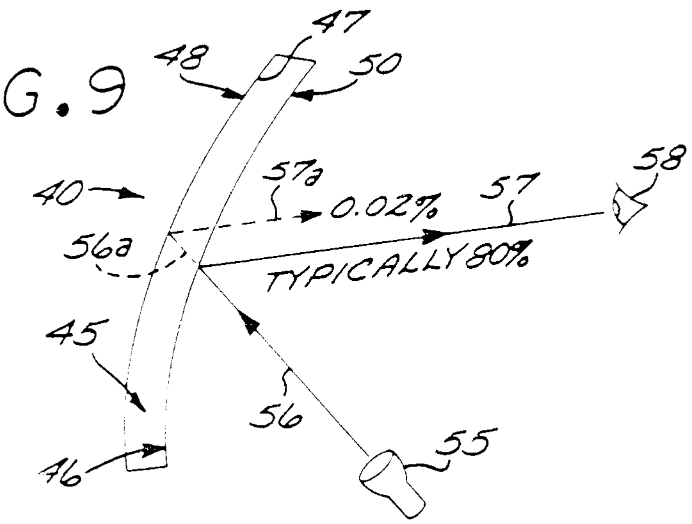


FIG. 10

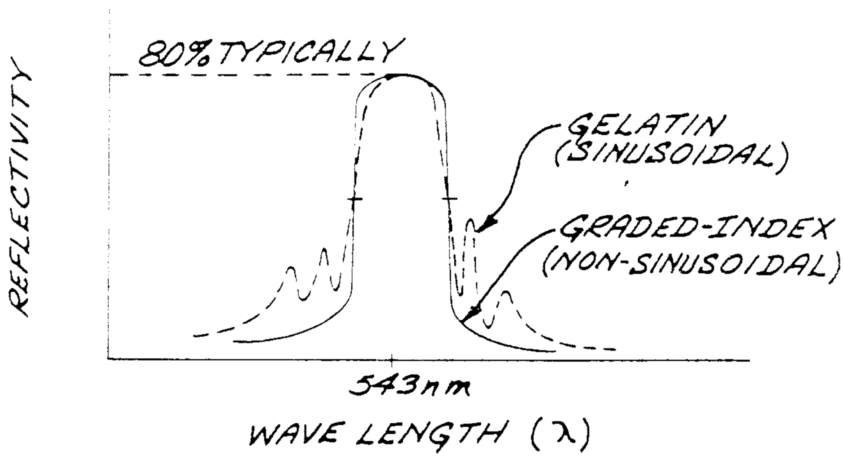


FIG. 11

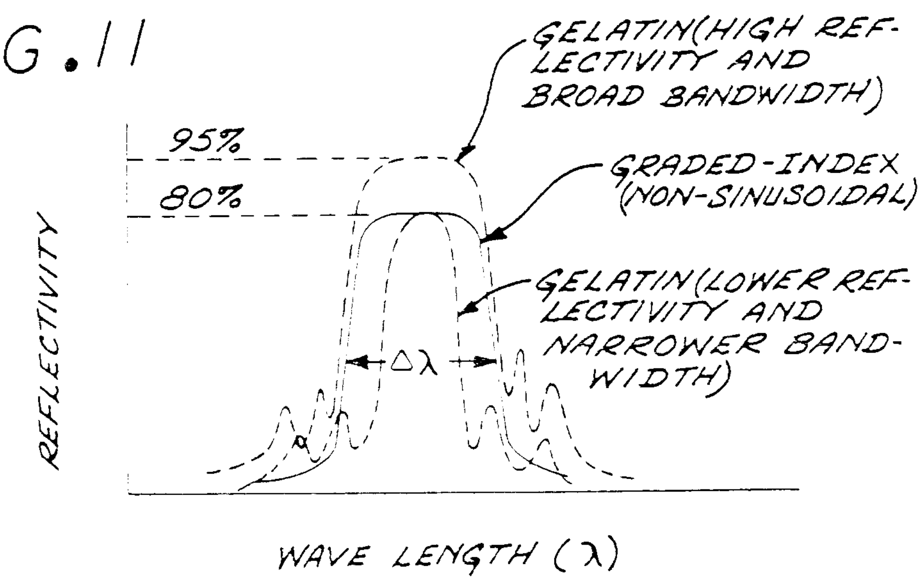

FIG.12

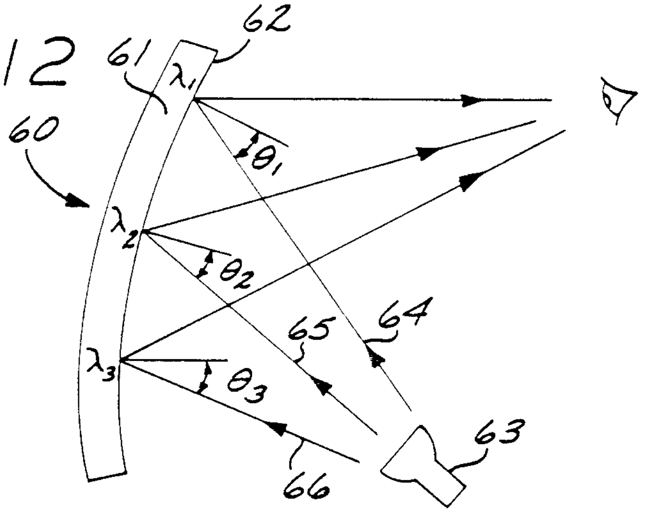


FIG.13

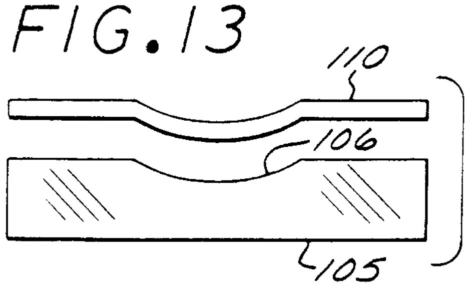


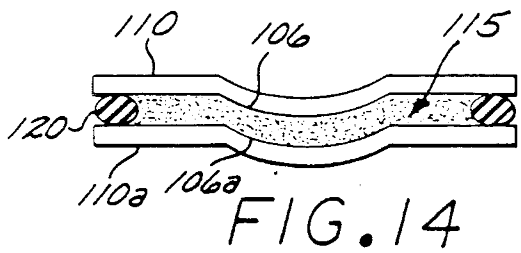


FIG.14

FIG.15

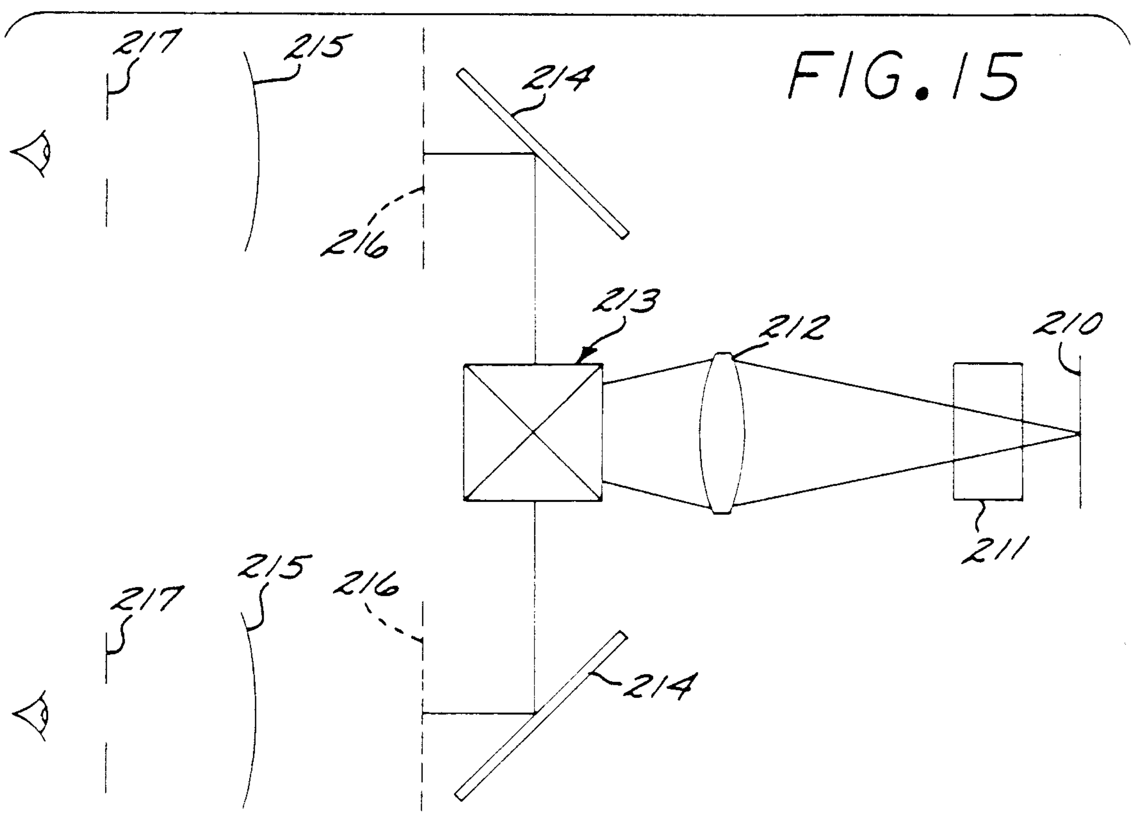

FIG. 16

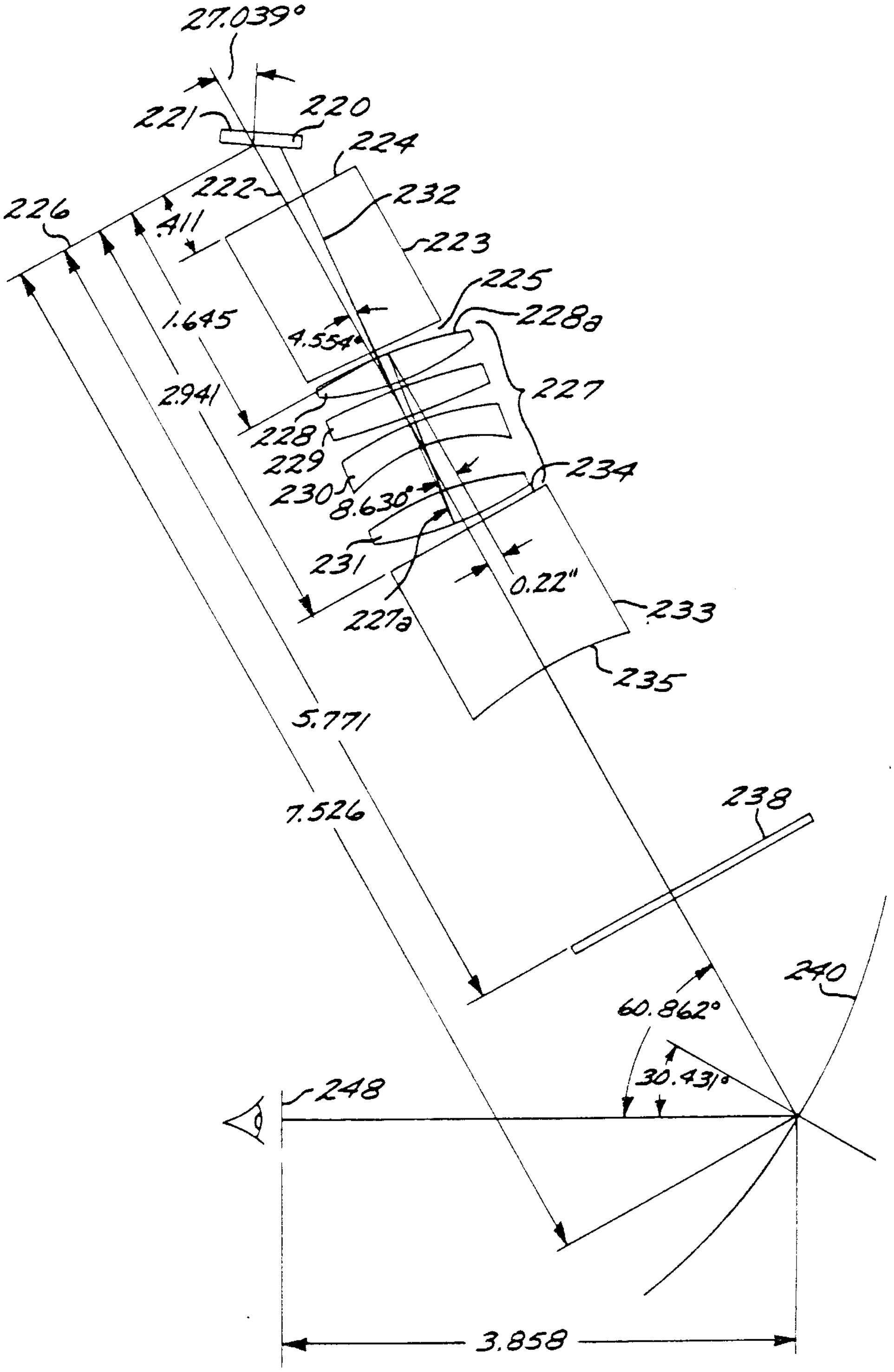
27.039°
221
220
224
222
232
226
.411
223
225
228a
1.645
4.554°
227
2.941
228
229
234
230
8.630°
231
0.22"
227a
233
235
5.771
7.526
238
240
60.862°
30.431°
248
3.858

FIG.17

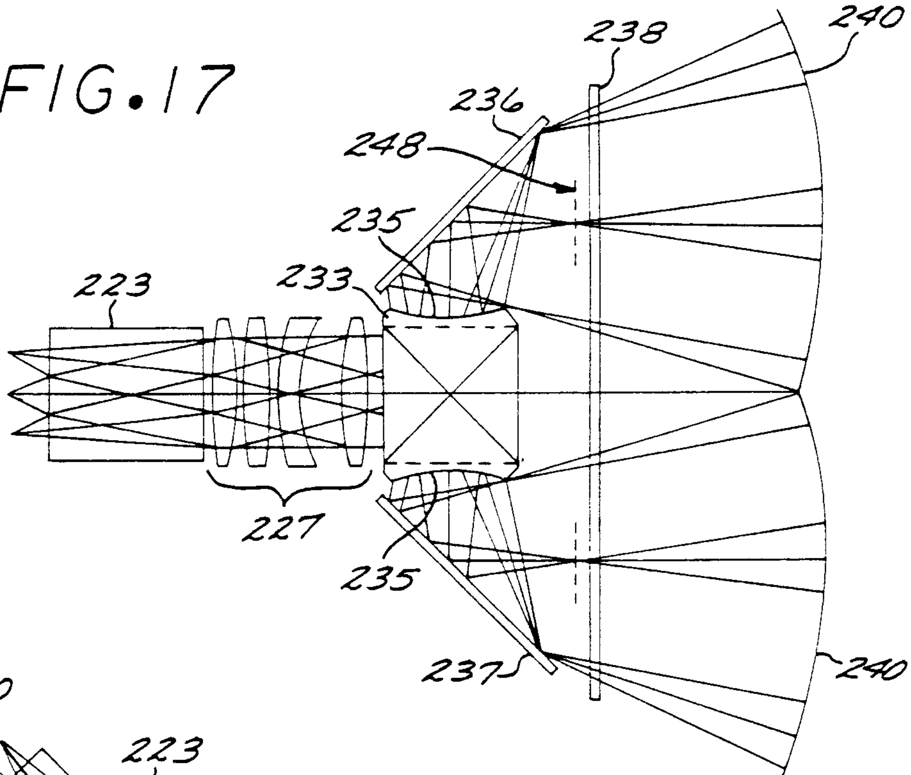
238
240
236
248
235
223
233
227
235
237
240

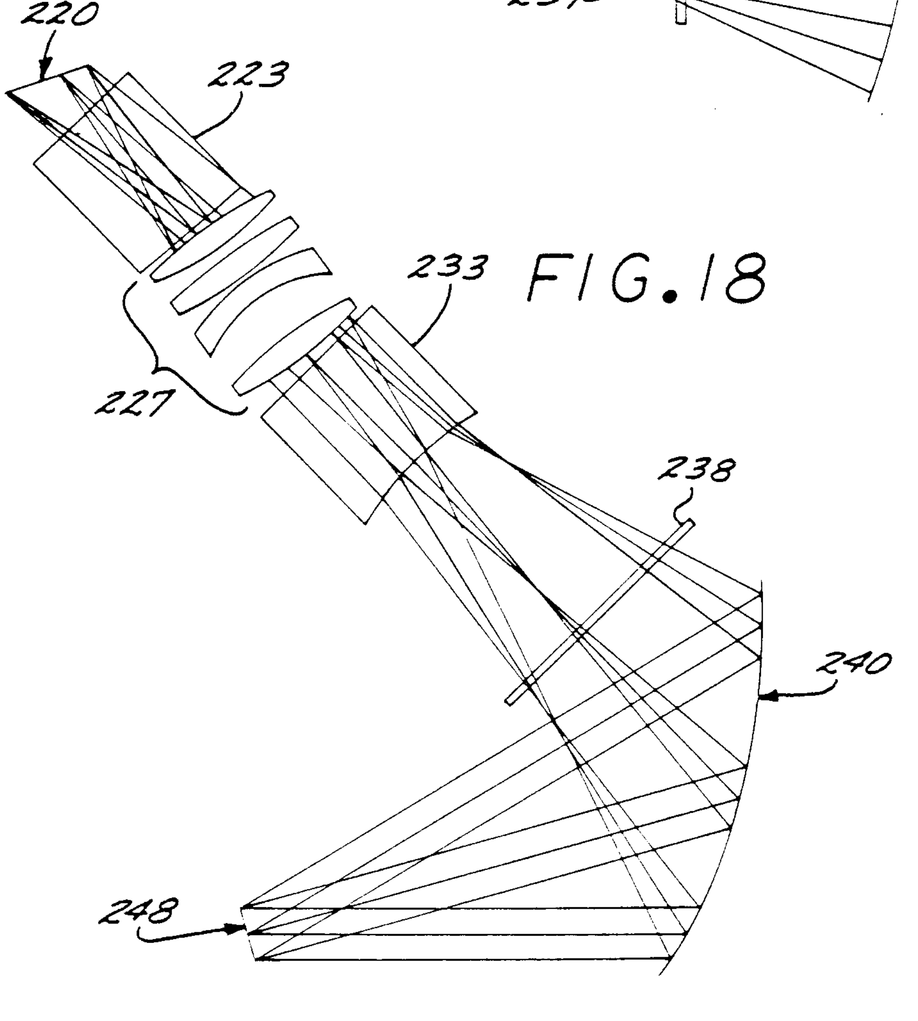
220
223
233
227
238
240
248

FIG.18

FIG. 19

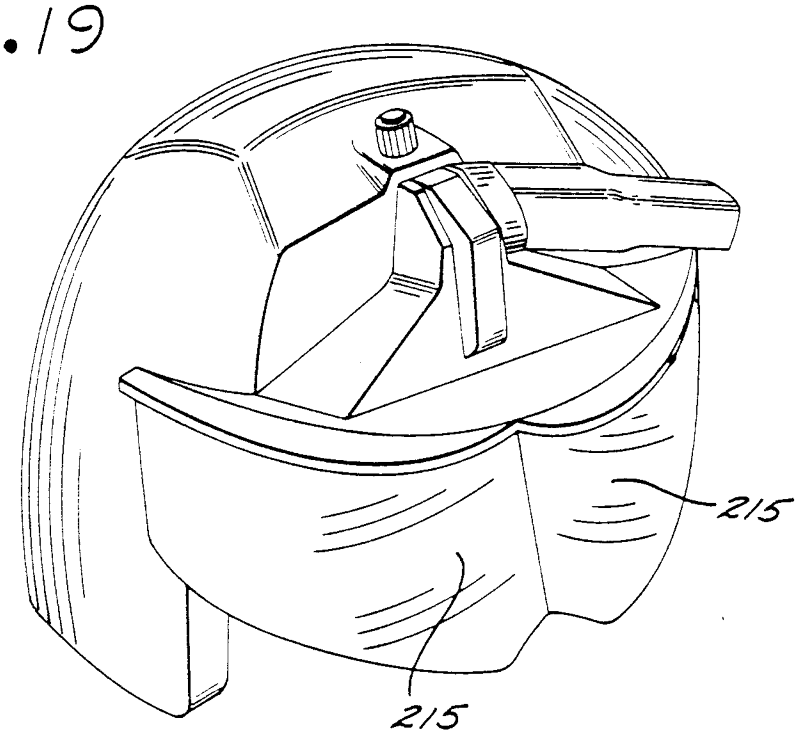


FIG. 20